# EUROPEAN PATENT APPLICATION

(11) **EP 4 648 342 A1**
(43) Date of publication of application: **12.11.2025**
(21) Application number: 25175013.9
(22) Date of filing: 08.05.2025
(51) Int. Cl.: H04L 5/00, H04B 7/00, H04L 5/14

(54) **METHOD USED BY USER EQUIPMENT, METHOD USED BY NETWORK DEVICE, AND USER EQUIPMENT**

(30) Priority: 10.05.2024 US 202463645150 P; 10.05.2024 US 202463645155 P; 23.04.2025 US 202519187968
(71) Applicant: Acer Incorporated, New Taipei City 221 (TW)
(72) Inventor: LO, Li-Chung, New Taipei City (TW); LEE, Chien-Min, New Taipei City (TW); CHEN, Jen-Hsien, New Taipei City (TW)
(74) Representative: Haseltine Lake Kempner LLP

(57) **Abstract**

A method used by a user equipment (UE), a method used by a network device (NW), and a user equipment (UE) are provided. In the method, a search space, SS, set configuration is received, and a downlink control information, DCI, is received according to the SS set configuration. An SS set is configured with a first control resource set, CORESET. The first CORESET is configured with a first transmission configuration indication, TCI, state. The first CORESET is associated with a serving cell identity, ID. The first TCI state is configured with one reference reference signal, RS. The reference RS is associated with a spatial receiver, RX, parameter.

## Description

### TECHNICAL FIELD

The present disclosure generally relates to a method used by a user equipment, a method used by a network device, and a user equipment.

### BACKGROUND

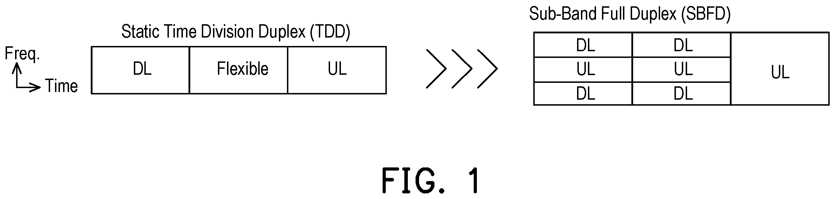

FIG. 1 is a schematic diagram that illustrates static time division duplex (TDD) and sub-band full duplex (SBFD). Referring to FIG. 1, on duplex operation, a new time resource type that is SBFD was introduced. In SBFD, downlink (DL) and uplink (UL) sub-bands would be allocated in the same symbols. However, in the time division duplex (TDD), DL and UL bands would be not allocated in the same symbol.

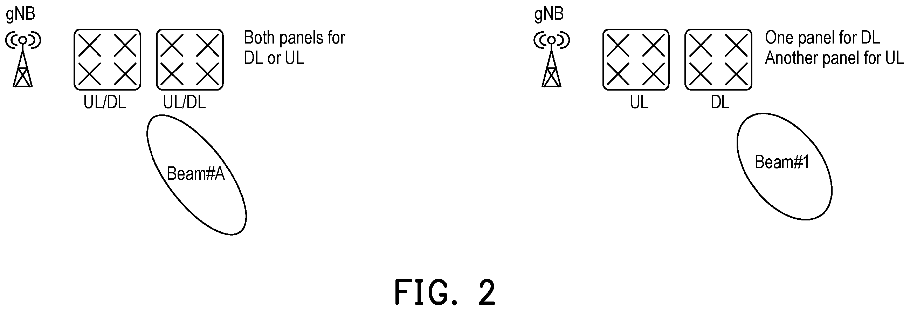

FIG. 2 is a schematic diagram that illustrates simultaneous transmit (Tx) and receive (Rx) in a multi-panel transmission scheme. Referring to FIG. 2, for simultaneous Tx/Rx and reducing adjacent channel interference, separate antenna panels may be supported. For example, panel 1 for UL transmission, and panel 2 for DL reception. However, the same beam (e.g., beam #A) for DL reception may be not only in SBFD resources but also in non-SBFD resources, and result in performance loss due to improper beam application for DL reception in both SBFD and non-SBFD resources.

### SUMMARY

Accordingly, the present disclosure is directed to a method used by a user equipment (UE), a method used by a network device, and a UE.

According to one or more exemplary embodiments of the disclosure, a method used by user equipment (UE) in a wireless communication system is provided. The method includes: receiving a search space (SS) set configuration, and receiving a downlink control information (DCI) according to the SS set configuration. An SS set is configured with a first control resource set (CORESET). The first CORESET is configured with a first transmission configuration indication (TCI) state. The first CORESET is associated with a serving cell identity (ID). The first TCI state is configured with one reference reference signal (RS). The reference RS is associated with a spatial receiver (RX) parameter.

According to one or more exemplary embodiments of the disclosure, a UE includes a transceiver, a memory, and a processor. The transceiver is used for transmitting or receiving signals. The memory is used for storing a program code. The processor is coupled to the transceiver and the memory. The processor is configured for executing the program to: receiving an SS set configuration through the transceiver, and receiving a DCI through the transceiver according to the SS set configuration. An SS set is configured with a first CORESET. The first CORESET is configured with a first TCI state. The first CORESET is associated with a serving cell ID. The first TCI state is configured with one reference RS. The reference RS is associated with a spatial RX parameter.

According to one or more exemplary embodiments of the disclosure, a method used by a network device in a wireless communication system is provided. The method includes: transmitting an SS set configuration, and transmitting a DCI according to the SS set configuration. An SS set is configured with a first CORESET. The first CORESET is configured with a first TCI state. The first CORESET is associated with a serving cell ID. The first TCI state is configured with one reference RS. The reference RS is associated with a spatial RX parameter.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram that illustrates static time division duplex (TDD) and sub-band full duplex (SBFD).
FIG. 2 is a schematic diagram that illustrates simultaneous transmit (Tx) and receive (Rx) in a multi-panel transmission scheme.
FIG. 3A is a schematic diagram that illustrates search space SS set monitoring for DCI reception.
FIG. 3B is a schematic diagram that illustrates a transmission configuration indication (TCI) state in a medium access control (MAC) control element (CE).
FIG. 4A is a schematic diagram that illustrates a common type SS set.
FIG. 4B is a schematic diagram that illustrates a UE-specific SS set.
FIG. 5A is a schematic diagram that illustrates a resource allocation in TDD.
FIG. 5B is a schematic diagram that illustrates a resource allocation in SBFD.
FIG. 6A is a schematic diagram that illustrates a beam management for non-SBFD symbols.
FIG. 6B is a schematic diagram that illustrates a beam management for SBFD symbols.
FIG. 7 is a schematic diagram that illustrates channel state information (CSI) report with two CSI report configurations for non-SBFD and SBFD resources.
FIG. 8 is a schematic diagram that illustrates a CSI report with one CSI report configuration for non-SBFD and SBFD resources.
FIG. 9A is a schematic diagram that illustrates a beam management for SBFD symbols without panel swapping.
FIG. 9B is a schematic diagram that illustrates a beam management for SBFD symbols with panel swapping.
FIG. 10 is a schematic diagram that illustrates a CSI report with three CSI report configurations for non-SBFD and SBFD resources.
FIG. 11 is a schematic diagram that illustrates a CSI report with one CSI report configuration for non-SBFD and SBFD resources.
FIG. 12 is a schematic diagram that illustrates a radio communication network architecture according to an exemplary embodiment of the present disclosure.
FIG. 13 is a flow chart that illustrates a method according to an exemplary embodiment of the present disclosure.
FIG. 14A is a schematic diagram that illustrates one SS set associated with two control resource sets (CORESETs) according to an exemplary embodiment of the present disclosure.
FIG. 14B is a schematic diagram that illustrates a resource allocation for monitoring SS set according to an exemplary embodiment of the present disclosure.
FIG. 15A is a schematic diagram that illustrates an SS set of common type used for non-SBFD and SBFD symbols according to an exemplary embodiment of the present disclosure.
FIG. 15B is a schematic diagram that illustrates a resource allocation for monitoring SS set according to an exemplary embodiment of the present disclosure.
FIG. 16 is a flow chart that illustrates an SS set associated with one or two CORESETs according to an exemplary embodiment of the present disclosure.
FIG. 17A is a schematic diagram that illustrates an SS set of UE-specific type used for non-SBFD and SBFD symbols according to an exemplary embodiment of the present disclosure.
FIG. 17B is a schematic diagram that illustrates a resource allocation for monitoring SS set according to an exemplary embodiment of the present disclosure.
FIG. 18A is a schematic diagram that illustrates an SS set of common type used for non-SBFD and SBFD symbols according to an exemplary embodiment of the present disclosure.
FIG. 18B is a schematic diagram that illustrates a resource allocation for monitoring the SS set according to an exemplary embodiment of the present disclosure.
FIG. 19 is a schematic diagram that illustrates two SS sets used for non-SBFD and SBFD symbols according to an exemplary embodiment of the present disclosure.
FIG. 20 is a schematic diagram that illustrates three SS sets used for non-SBFD and SBFD symbols according to an exemplary embodiment of the present disclosure.
FIG. 21 is a flow chart that illustrates an SS set associated with one or two TCI states according to an exemplary embodiment of the present disclosure.
FIG. 22A is a schematic diagram that illustrates an association with two TCI states and CORESET identity (ID) according to an exemplary embodiment of the present disclosure.
FIG. 22B is a schematic diagram that illustrates a TCI state indication according to an exemplary embodiment of the present disclosure.
FIG. 23 is a schematic diagram that illustrates a co-existence with single frequency network (SFN) and SBFD according to an exemplary embodiment of the present disclosure.
FIG. 24 is a schematic diagram that illustrates a TCI state indication according to an exemplary embodiment of the present disclosure.
FIG. 25A is a schematic diagram that illustrates a TCI state indication according to an exemplary embodiment of the present disclosure.
FIG. 25B is a schematic diagram that illustrates a co-existence with SFN and SBFD according to an exemplary embodiment of the present disclosure.
FIG. 26A is a schematic diagram that illustrates a TCI state indication according to an exemplary embodiment of the present disclosure.
FIG. 26B is a schematic diagram that illustrates a co-existence with SFN and SBFD according to an exemplary embodiment of the present disclosure.
FIG. 27A is a schematic diagram that illustrates a TCI state indication according to an exemplary embodiment of the present disclosure.
FIG. 27B is a schematic diagram that illustrates a co-existence with SFN and SBFD according to an exemplary embodiment of the present disclosure.
FIG. 28 is a schematic diagram that illustrates a TCI state indication according to an exemplary embodiment of the present disclosure.
FIG. 29A is a schematic diagram that illustrates a TCI state indication according to an exemplary embodiment of the present disclosure.
FIG. 29B is a schematic diagram that illustrates a co-existence with SFN and SBFD according to an exemplary embodiment of the present disclosure.
FIG. 29C is a schematic diagram that illustrates a TCI state indication according to an exemplary embodiment of the present disclosure.
FIG. 29D is a schematic diagram that illustrates a co-existence with SFN and SBFD according to an exemplary embodiment of the present disclosure.
FIG. 30A is a schematic diagram that illustrates an association with a TCI state and two reference RSs according to an exemplary embodiment of the present disclosure.
FIG. 30B is a schematic diagram that illustrates a TCI state indication according to an exemplary embodiment of the present disclosure.
FIG. 31A is a schematic diagram that illustrates an association with an SS set of UE-specific type and two reference RSs according to an exemplary embodiment of the present disclosure.
FIG. 31B is a schematic diagram that illustrates a resource allocation for monitoring the SS set according to an exemplary embodiment of the present disclosure.
FIG. 32A is a schematic diagram that illustrates an association with an SS set of common type and one reference RS according to an exemplary embodiment of the present disclosure.
FIG. 32B is a schematic diagram that illustrates a resource allocation for monitoring the SS set according to an exemplary embodiment of the present disclosure.
FIG. 33 is a schematic diagram that illustrates an association with two SS sets and two reference RSs according to an exemplary embodiment of the present disclosure.
FIG. 34 is a schematic diagram that illustrates an association with two SS sets and three reference RSs according to an exemplary embodiment of the present disclosure.
FIG. 35A is a schematic diagram that illustrates one RS associated with non-SBFD symbols according to an exemplary embodiment of the present disclosure.
FIG. 35B is a schematic diagram that illustrates one RS associated with SBFD symbols according to an exemplary embodiment of the present disclosure.
FIG. 36 is a schematic diagram that illustrates a CSI report configuration for two Rx beams according to an exemplary embodiment of the present disclosure.
FIG. 37A is a schematic diagram that illustrates an association with one CORESET ID and two Rx beams according to an exemplary embodiment of the present disclosure.
FIG. 37B is a schematic diagram that illustrates a resource allocation for monitoring the SS set according to an exemplary embodiment of the present disclosure.
FIG. 38 is a schematic diagram that illustrates a CSI report configuration for three Rx beams according to an exemplary embodiment of the present disclosure.
FIG. 39 is a schematic diagram that illustrates an association with one CORESET ID and three Rx beams according to an exemplary embodiment of the present disclosure.
FIG. 40 is a schematic diagram that illustrates an association with two CSI report configurations and two Rx beams according to an exemplary embodiment of the present disclosure.
FIG. 41 is a schematic diagram that illustrates a TCI state indication according to an exemplary embodiment of the present disclosure.
FIG. 42 is a schematic diagram that illustrates a TCI state indication according to an exemplary embodiment of the present disclosure.
FIG. 43 is a schematic diagram that illustrates an association with two CSI report configurations and two Rx beams for non-SBFD and SBFD symbols according to an exemplary embodiment of the present disclosure.
FIG. 44A is a schematic diagram that illustrates an association with one CORESET ID and two Rx beams for non-SBFD and SBFD symbols according to an exemplary embodiment of the present disclosure.
FIG. 44B is a schematic diagram that illustrates a resource allocation for monitoring the SS set according to an exemplary embodiment of the present disclosure.
FIG. 45A is a schematic diagram that illustrates UE capability 0 according to an exemplary embodiment of the present disclosure.
FIG. 45B is a schematic diagram that illustrates UE capability A according to an exemplary embodiment of the present disclosure.
FIG. 45C is a schematic diagram that illustrates UE capability B according to an exemplary embodiment of the present disclosure.
FIG. 46 is a schematic diagram that illustrates a separate CSI report corresponding to a separate Rx beam according to an exemplary embodiment of the present disclosure.
FIG. 47 is a schematic diagram that illustrates a TCI state indication according to an exemplary embodiment of the present disclosure.
FIG. 48 is a schematic diagram that illustrates a separate CSI report corresponding to a separate Rx beam according to an exemplary embodiment of the present disclosure.
FIG. 49A is a schematic diagram that illustrates an implicit resource type association according to an exemplary embodiment of the present disclosure.
FIG. 49B is a schematic diagram that illustrates a resource allocation for monitoring the SS set according to an exemplary embodiment of the present disclosure.
FIG. 50A is a schematic diagram that illustrates an explicit resource type association according to an exemplary embodiment of the present disclosure.
FIG. 50B is a schematic diagram that illustrates a resource allocation for monitoring the SS set according to an exemplary embodiment of the present disclosure.
FIG. 51A is a schematic diagram that illustrates an implicit resource type association according to an exemplary embodiment of the present disclosure.
FIG. 51B is a schematic diagram that illustrates a resource allocation for monitoring the SS set according to an exemplary embodiment of the present disclosure.
FIG. 52A is a schematic diagram that illustrates an explicit resource type association according to an exemplary embodiment of the present disclosure.
FIG. 52B is a schematic diagram that illustrates a resource allocation for monitoring the SS set according to an exemplary embodiment of the present disclosure.
FIG. 53A is a schematic diagram that illustrates an association with an SS set of common type and one TCI state according to an exemplary embodiment of the present disclosure.
FIG. 53B is a schematic diagram that illustrates a resource allocation for monitoring the SS set according to an exemplary embodiment of the present disclosure.
FIG. 54A is a schematic diagram that illustrates an association with an SS set of common type and two TCI states for non-SBFD and SBFD symbols according to an exemplary embodiment of the present disclosure.
FIG. 54B is a schematic diagram that illustrates a resource allocation for monitoring the SS set according to an exemplary embodiment of the present disclosure.
FIG. 55A is a schematic diagram that illustrates an association with an SS set of common type and two TCI states for non-SBFD and SBFD symbols according to an exemplary embodiment of the present disclosure.
FIG. 55B is a schematic diagram that illustrates a resource allocation for monitoring the SS set according to an exemplary embodiment of the present disclosure.
FIG. 56 is a schematic diagram that illustrates an association with an SS set of common type and two TCI states for non-SBFD and SBFD symbols according to an exemplary embodiment of the present disclosure.
FIG. 57A is a schematic diagram that illustrates an association with an SS set of common type and two reference RSs for non-SBFD and SBFD symbols according to an exemplary embodiment of the present disclosure.
FIG. 57B is a schematic diagram that illustrates a resource allocation for monitoring the SS set according to an exemplary embodiment of the present disclosure.
FIG. 58 is a schematic diagram that illustrates an association with one CORESET ID and one Rx beam for non-SBFD and SBFD symbols according to an exemplary embodiment of the present disclosure.
FIG. 59 is a schematic diagram that illustrates an association with an SS set with common type and one Rx beam for non-SBFD and SBFD symbols according to an exemplary embodiment of the present disclosure.
FIG. 60A is a schematic diagram that illustrates associations with SS sets and one or two TCI states for non-SBFD and SBFD symbols according to an exemplary embodiment of the present disclosure.
FIG. 60B is a schematic diagram that illustrates a resource allocation for monitoring the SS set according to an exemplary embodiment of the present disclosure.
FIG. 61A is a schematic diagram that illustrates an association with two SS sets and two TCI states according to an exemplary embodiment of the present disclosure.
FIG. 61B is a schematic diagram that illustrates a resource allocation for monitoring the SS set according to an exemplary embodiment of the present disclosure.
FIG. 62A is a schematic diagram that illustrates associations with SS sets and one or two reference RSs for non-SBFD and SBFD symbols according to an exemplary embodiment of the present disclosure.
FIG. 62B is a schematic diagram that illustrates a resource allocation for monitoring the SS set according to an exemplary embodiment of the present disclosure.
FIG. 63A is a schematic diagram that illustrates associations with two SS sets and two reference RSs according to an exemplary embodiment of the present disclosure.
FIG. 63B is a schematic diagram that illustrates a resource allocation for monitoring the SS set according to an exemplary embodiment of the present disclosure.
FIG. 64 is a flow chart that illustrates a method according to an exemplary embodiment of the present disclosure.
FIG. 65 is a block diagram that illustrates a communication device according to an exemplary embodiment of the present disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

The abbreviations in the present disclosure are defined as follows and unless otherwise specified, the acronyms have the following meanings:

### Abbreviation Full name

- CSI: Channel state information
- CSI-RS: Channel state information reference signal
- CORESET: Control Resource Set
- DCI: downlink control information
- DL: downlink
- DM-RS: Demodulation RS
- gNodeB(gNB): next Generation Node B
- HARQ-ACK: Hybrid Automatic Repeat request- acknowledgment
- ID: identity
- L1: layer 1
- MAC: medium access control
- MAC CE: MAC control element
- NW: Network
- PDCCH: Physical downlink control channel
- PDSCH: Physical downlink shared channel
- PUCCH: physical uplink control channel
- PUSCH: physical uplink share channel
- QCL: quasi co-located

- RRC: radio resource control
- RS: reference signal
- RSRP: Reference signal receiving power
- RSRQ: Reference signal receiving quality
- SINR: single to interference noise ratio
- SFN: single frequency network
- SRS: Sounding reference signal
- SS: search space
- SSB: Synchronization signal block
- SSBRI: SSB resource indicator
- SBFD: Sub-Band Full Duplex
- TCI: Transmission configuration indication
- TDD: Time Division Duplex
- TRP: transmission reception point
- Tx beam: transmitted beam
- UE: user equipment
- UL: uplink

Some related technologies are introduced first.

A cell in this disclosure may be a serving cell, a carrier or a CC (component carrier), a serving cell, MCG (master cell group), SCG (second cell group)..., but not limited herein.

"Configured" in this disclosure may be default/predefined/fixed/configured/activated/indicated, etc., but not limited herein.

RRC in this disclosure may be MAC CE, DCI, etc., but not limited herein.

UL in this disclosure may be PUSCH, PUCCH, PRACH, SRS, RS, etc., but not limited herein.

DL in this disclosure may be PDSCH, PDCCH, SSB, CSI-RS, RS, etc., but not limited herein.

gNB in this disclosure may be a NCR, a NCR group, UE, TRP, gNB, panel, etc. , but not limited herein.

PDSCH in this disclosure may be aperiodic CSI-RS.

TCI state in this disclosure may be QCL assumption, QCL type, reference RS, channel property, etc., but not limited herein.

Resource type in this document may be:
DL;
UL;
SBFD;
Non-SBFD;
Special;
Flexible;
the symbols/slots with UL sub-band and/or UL sub-band.

SBFD in this document may be:
Special;
the symbols/slots with UL sub-band and/or UL sub-band;
other than DL, UL, or flexible.

RS in this document may be DL RS and/or UL RS.

A DL RS configuration in this disclosure may be:
a DM-RS group;
a DM-RS group index;
a DM-RS resource;
a DM-RS resource index;
a DM-RS port index;
a DM-RS port;
a CSI-RS resource set index;
a CSI-RS resource set;
a CSI-RS resource index;
a CSI-RS resource;
a CSI-RS port index;
a CSI-RS port;
a SSB resource set index;
a SSB resource set;
a SSB resource index;
a SSB resource;
a SSB port index;
a SSB port;
etc, but not limited herein.

A UL RS configuration in this disclosure may be:
a DM-RS group;
a DM-RS group index;
a DM-RS resource;
a DM-RS resource index;
a DM-RS port index;
a DM-RS port;
a RACH group;
a RACH group index;
a RACH resource;
a RACH resource index;
a SRS resource set index;
a SRS resource set;
a SRS resource index;
a SRS resource;
a SRS port index;
a SRS port;
etc, but not limited herein.

A beam in this disclosure may be represented by:
an antenna,
an antenna port,
an antenna element,
a group of antenna,
a group of antenna port,
a group of antenna element,
a spatial domain filter,
a reference signal resource,
a QCL assumption,
a TXRU,
etc, but not limited herein. For example, a first beam may be represented as a first antenna port, a first group of antenna port, or a first spatial domain filter. For example, a first beam direction may be represented as a QCL assumption or a spatial domain filter.

A Rx beam in configuration in this disclosure may be:
a spatial Rx parameter,
a spatial domain receive filter,
a panel,
etc, but not limited herein.

A Tx beam in configuration in this disclosure may be
a spatial Tx parameter,
a spatial domain transmission filter,
a panel,
etc, but not limited herein.

An index or an identity in this disclosure may be
CORESETPoolIndex,
TRP ID,
Panel ID,
etc, but not limited herein.

A Cell TRP (e.g., transmission reception point) in this disclosure may be:
a TRP,
a serving cell,
a gNodeB (e.g., next Generation Node B),
a panel,
an unlicensed cell,
an unlicensed serving cell,
an unlicensed TRP,
a gNodeB,
an eNodeB (evolved NodeB),
an eNB,
etc., but not limited herein.

The communication device in this disclosure may be represented by UE, or gNodeB, but is not limited herein.

Combinations of embodiments disclosed in this disclosure are not precluded.

All steps in the embodiment may not be performed in a step-by-step way.

Embodiments disclosed in this disclosure may apply for unlicensed band, licensed band, non-DRX mode, DRX mode, or power saving, but are not limited herein.

In one example,
the UE may communicate with a gNB (or network) with a carrier aggregation (CA) system. In this case, the UE may be configured with multiple serving cells.
The UE may receive a PDSCH (or transmit a PUSCH) on a serving cell A of the gNB according to a DCI received in a serving cell B of the gNB.
The UE may receive a PDSCH (or transmit a PUSCH) on a serving cell of the gNB according to a DCI, wherein the DCI may indicate a priority index.
The UE may receive a PDSCH on a serving cell of the gNB according to a DCI, wherein the DCI may indicate a TCI state.
The UE may transmit a PUSCH on a serving cell of the gNB according to a DCI, wherein the DCI may indicate an SRI.
The UE may be configured with a configuration regarding to a search space (or search space set) for receiving/monitoring the DCI.
The UE may be configured with a configuration regarding to a control resource set (CORESET) for receiving/monitoring the DCI.
The UE may be configured with a configuration regarding to the PDCCH repetition for receiving/monitoring the DCI. Wherein each repetition of a DCI may be transmitted by different time domain resource, frequency domain resource or TCI states.

In one example, gNB in this disclosure may be
disable/turn off at least one panel for Network energy saving (NES);
one panel may for transmitting a signal for e.g., sensing, and another panel may for receiving a reflection of the signal on integrated sensing and communication (ISAC).

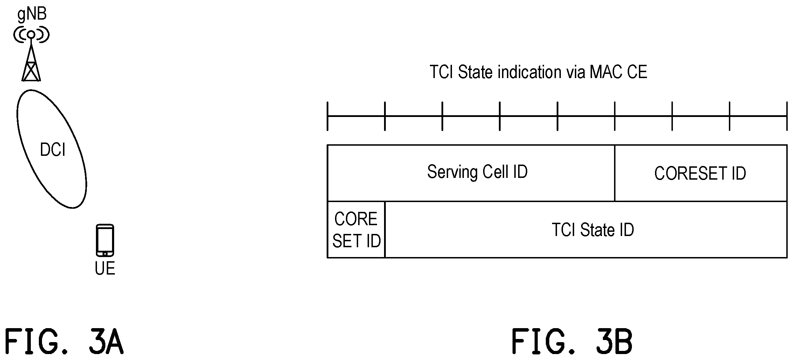

FIG. 3A is a schematic diagram that illustrates search space SS set monitoring for DCI reception. Referring FIG. 3A, UE may monitor SS set for DCI reception according to a TCI state associated with the corresponding CORESET. For example, a DCI is associated with an SS set ID in which the SS set is associated with the time domain-related parameter. The SS set ID may be further associated with a CORESET ID in which the CORESET is associated with the frequency domain-related parameter. Furthermore, the CORESET ID may be further associated with a TCI state ID in which the TCI state is associated with the spatial domain-related parameter.

FIG. 3B is a schematic diagram that illustrates the transmission configuration indication (TCI) state in the medium access control (MAC) control element (CE). Referring to FIG. 3B, in the TCI state indication, the SS set (ID) may be associated with a CORESET (ID). The CORESET may be activated with one TCI state.

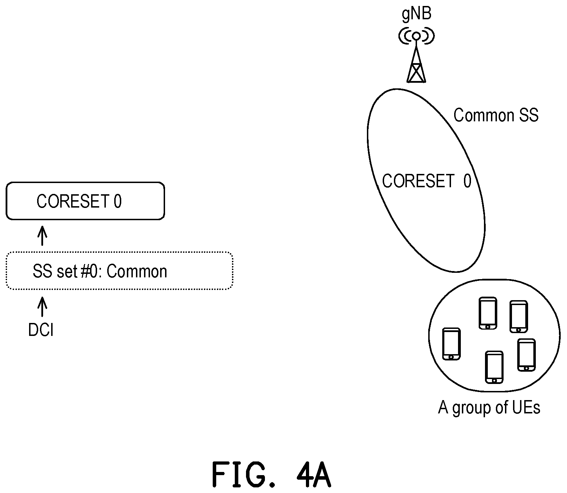

FIG. 4A is a schematic diagram that illustrates a common type SS set. Referring to FIG. 4A, an SS set for PDCCH may be a common type monitored by a group of UEs, e.g., CORESET zero comprising system information.

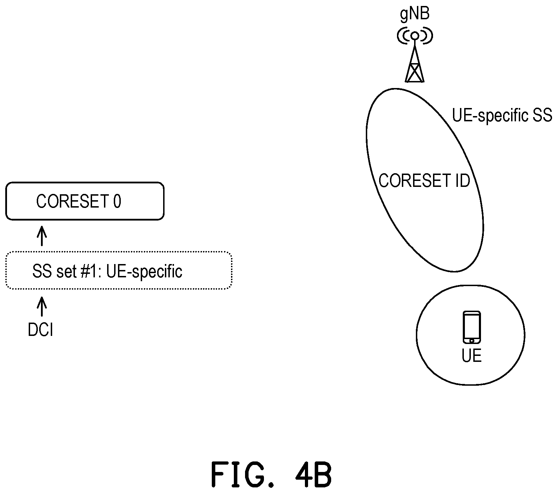

FIG. 4B is a schematic diagram that illustrates a UE-specific SS set. Referring to FIG. 4B, an SS set for PDCCH may be a UE-specific type monitored by a single UE, e.g., for DL/UL scheduling.

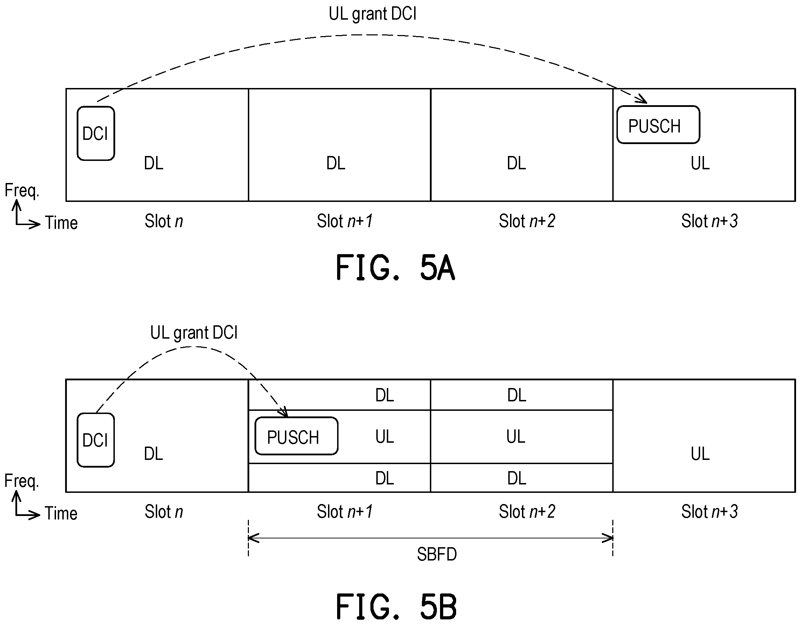

FIG. 5A is a schematic diagram that illustrates a resource allocation in TDD. Referring to FIG. 5A, in the time division duplex (TDD), the time domain resource may be split between downlink and uplink, and may result in increased UL latency.

FIG. 5B is a schematic diagram that illustrates a resource allocation in SBFD. Referring to FIG. 5B, in SBFD, the feasibility of allowing the simultaneous existence of downlink and uplink. The subbands do not overlap the full duplex at the gNB side within a conventional TDD band.

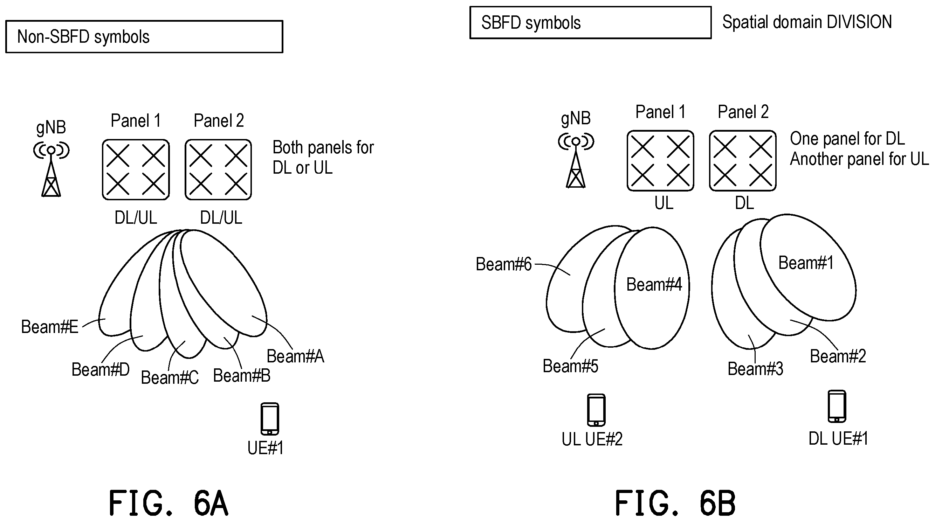

FIG. 6A is a schematic diagram that illustrates a beam management for non-SBFD symbols, and FIG. 6B is a schematic diagram that illustrates a beam management for SBFD symbols. Referring to FIG. 6A and FIG. 6B, an NW may prepare two sets of RSs for beam management, e.g.,
one set for non-SBFD, e.g., the first CSI report;
another set for SBFD, e.g., the second CSI report.

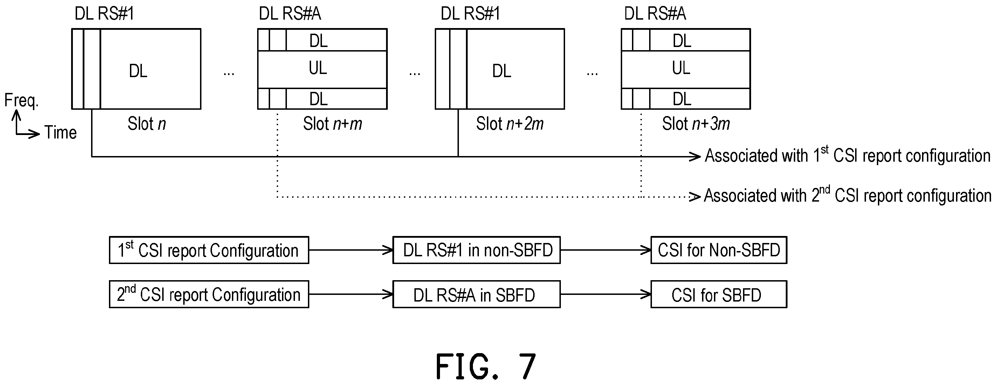

FIG. 7 is a schematic diagram that illustrates channel state information (CSI) report with two CSI report configurations for non-SBFD and SBFD resources. Referring to FIG. 7, UE may be configured with 2 CSI report configurations, where
the first CSI report configuration may be associated with a first RS (e.g., DL RS#1) in non-SBFD resources, and UE may report CSI according to the first RS,
the second CSI report configuration may be associated with a second RS (e.g., DL RS#A) in non-SBFD resources, and UE may report CSI according to the second RS.

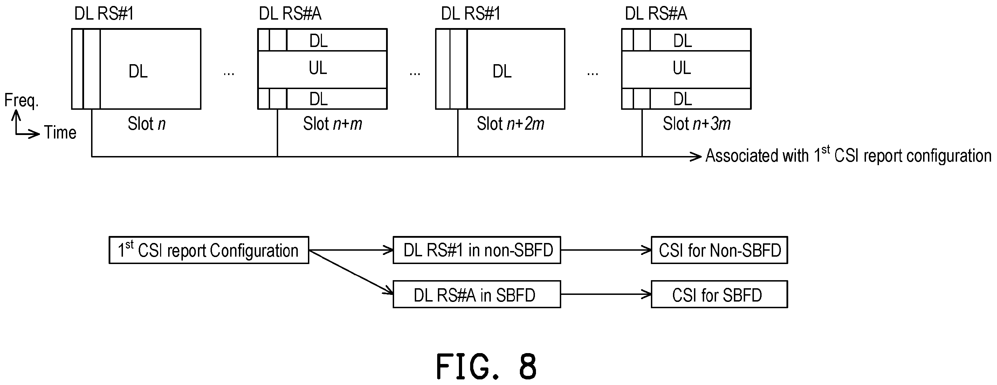

FIG. 8 is a schematic diagram that illustrates a CSI report with one CSI report configuration for non-SBFD and SBFD resources. Referring to FIG. 8, UE may be configured with one CSI report configuration, where
the first CSI report configuration may be associated with a first RS (e.g., DL RS#1) in non-SBFD resources, and UE may report CSI according to the first RS,
the first CSI report configuration may be associated with a second RS (e.g., DL RS#A) in non-SBFD resources, and UE may report CSI according to the second RS.

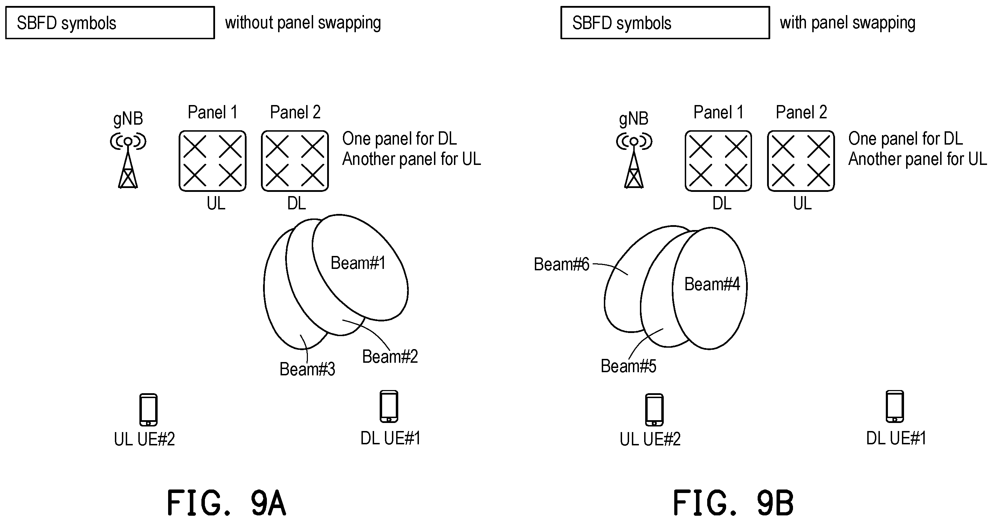

FIG. 9A is a schematic diagram that illustrates a beam management for SBFD symbols without panel swapping, and FIG. 9B is a schematic diagram that illustrates a beam management for SBFD symbols with panel swapping. Referring to FIG. 9A and FIG. 9B, an NW may prepare more than one set of RSs for beam management, e.g.,
the first set for non-SBFD, e.g., the first CSI report;
the second set for SBFD with panel swapping as shown in FIG. 9B, e.g., the second CSI report; the third set for SBFD, without panel swapping as shown in FIG. 9A, e.g., the third CSI report.

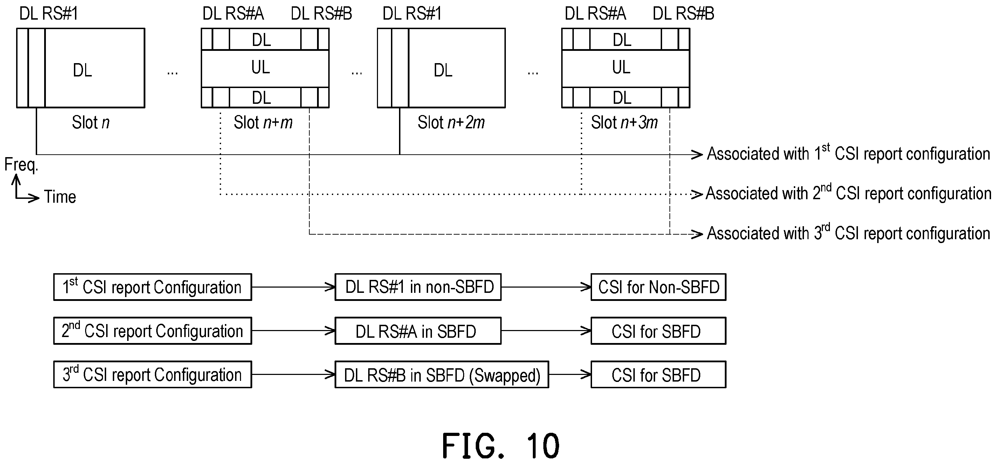

FIG. 10 is a schematic diagram that illustrates CSI report with three CSI report configurations for non-SBFD and SBFD resources. Referring to FIG. 10, UE may be configured with three CSI report configurations, where
the first CSI report configuration may be associated with a first RS (e.g., DL RS#1) in non-SBFD resources, and UE may report CSI according to the first RS,
the second CSI report configuration may be associated with a second RS (e.g., DL RS#A) in non-SBFD resources, and UE may report CSI according to the second RS,
resources, and UE may report CSI according to the first RS,
the third CSI report configuration may be associated with a third RS (e.g., DL RS#B) in non-SBFD resources, and UE may report CSI according to the third RS.

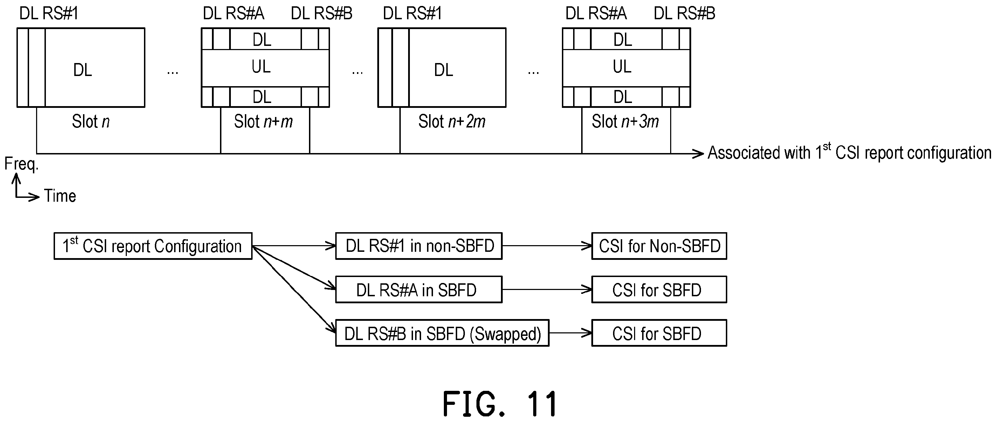

FIG. 11 is a schematic diagram that illustrates a CSI report with one CSI report configuration for non-SBFD and SBFD resources. Referring to FIG. 11, UE may be configured with one CSI report configuration, where
the first CSI report configuration may be associated with a first RS (e.g., DL RS#1) in non-SBFD resources, and UE may report CSI according to the first RS,
the first CSI report configuration may be associated with a second RS (e.g., DL RS#A) in non-SBFD resources, and UE may report CSI according to the second RS,
the first CSI report configuration may be associated with a third RS (e.g., DL RS#B) in non-SBFD resources, and UE may report CSI according to the third RS.

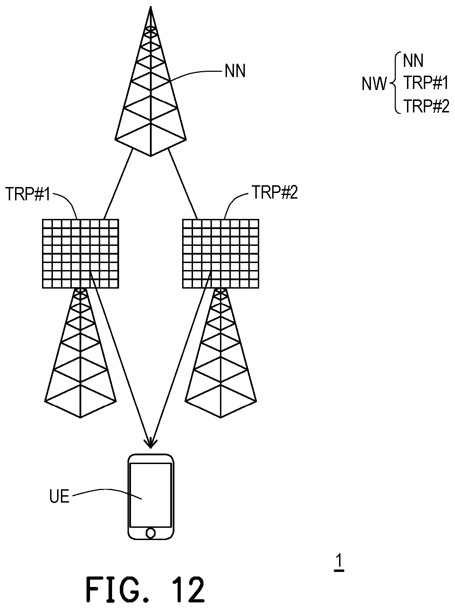

FIG. 12 is a schematic diagram that illustrates a radio communication network architecture 1 according to an exemplary embodiment of the present disclosure. Referring to FIG. 12, a radio communication network architecture 1 (e.g., a Long Term Evolution (LTE) system, an LTE-Advanced (LTE-A) system, an LTE-Advanced Pro system, or a 5G NR Radio Access Network (RAN)) typically includes at least one base station (BS) NW, at least one UE, and one or more optional network elements that provide connection towards a network. The UE communicates with the network (e.g., a Core Network (CN), an Evolved Packet Core (EPC) network, an Evolved Universal Terrestrial Radio Access Network (E-UTRAN), a 5G Core (5GC), or an internet), through a RAN established by one or more base stations.

It should be noted that, in the present disclosure, UE may include, but is not limited to, a mobile station, a mobile terminal or device, or a user communication radio terminal. For example, UE may be a portable radio equipment, which includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a radio access network.

A base station NW may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the scope of the present disclosure should not be limited to the above-mentioned protocols.

A base station NW may include but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) BS in connection with the 5GC, a next-generation Node B (gNB) as in the 5G Access Network (5G-AN), and any other apparatus capable of controlling radio communication and managing radio resources within a cell. The BS NW may connect to serve one or more UEs through a radio interface to the network.

The base station (BS) NW (or called network device) may be operable to provide radio coverage to a specific geographical area using a plurality of cells included in the RAN. The BS NW may support the operations of the cells. Each cell may be operable to provide services to at least one UE within its radio coverage. Specifically, each cell (often referred to as a serving cell) may provide services to serve one or more UEs within its radio coverage (e.g., each cell schedules the Downlink (DL) and optionally Uplink (UL) resources to at least one UE within its radio coverage for DL and optionally UL packet transmission). The BS NW may communicate with one or more UEs in the radio communication system through the plurality of cells. It should be noted that for UL, a UE is a transmitter performing UL transmission, and a network (node) is a receiver performing UL reception. For DL, a UE is a receiver performing DL reception, and a network (node) is a transmitter performing DL transmission.

The base station NW may include a network node NN and one or more TRPs, such as TRP#1 and TRP#2.

A network node NN may be, but is not limited to, a node B (NB) as in the LTE, an evolved node B (eNB) as in the LTE-A, a radio network controller (RNC) as in the UMTS, a base station controller (BSC) as in the GSM/GERAN, a new radio evolved node B (NR eNB) as in the NR, a next generation node B (gNB) as in the NR, and any other apparatus capable of controlling radio communication and managing radio resources within one or more cells.

A TRP (e.g., TRP#1 or TRP#2), which may also be regarded as a remote radio head (RRH), maybe a transceiver under the protocols of 5G NR wireless communication system and/or the protocols of a 4G wireless communication system. A TRP may be communicatively connected to a network node NN. The network node NN may connect to serve one or more UEs through one or more TRPs in the radio communication system. For example, TRP#1 and TRP#2 serve one UE, and TRP#2 serves another UE, but is not limited thereto.

As discussed above, the frame structure for NR is to support flexible configurations for accommodating various next generation (e.g., 5G) communication requirements, such as Enhanced Mobile Broadband (eMBB), Massive Machine Type Communication (mMTC), Ultra-Reliable and Low-Latency Communication (URLLC), while fulfilling high reliability, high data rate and low latency requirements. The Orthogonal Frequency-Division Multiplexing (OFDM) technology as agreed in 3GPP may serve as a baseline for NR waveform. The scalable OFDM numerology, such as the adaptive sub-carrier spacing, the channel bandwidth, and the Cyclic Prefix (CP) may also be used. Additionally, two coding schemes are considered for NR: (1) Low-Density Parity-Check (LDPC) code and (2) Polar Code. The coding scheme adaption may be configured based on the channel conditions and/or the service applications.

It should be understood that the terms "system" and "network" used in the disclosure are often used interchangeably. The term "and/or" in the disclosure is only an association relationship describing the associated objects, which means that there can be three kinds of relationships, for example, A and/or B, which can mean three situations: A is present alone, A and B are present simultaneously, or B is present alone. In addition, the character "/" in the disclosure generally indicates that the associated objects are in an "or" relationship.

To facilitate understanding of the technical solutions of the embodiments of the disclosure, the technical concepts related to the embodiments of the disclosure are described below.

It should be noticed that there may be a DL (e.g., physical downlink control channel, PDCCH) reception with a TCI state regardless of resource type. However, the DL (e.g., PDCCH) reception may have an inappropriate TCI state on duplex operation with SBFD resources and result in failure detection of DL channel. Therefore, for DL (e.g., PDCCH) reception on duplex operation, per-resource-type TCI state would be considered. Furthermore, spatial domain filter determination for SS set monitoring would be considered.

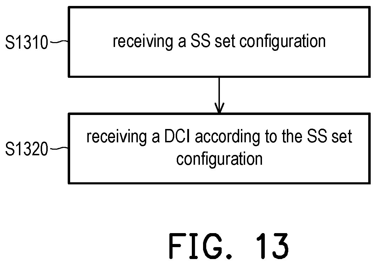

FIG. 13 is a flow chart that illustrates a method according to an exemplary embodiment of the present disclosure. Referring to FIG. 13, the method may be implemented by a UE. The UE receives a search space (SS) set configuration (step S1310). Specifically, an SS set corresponding to the SS set configuration is configured with a first control resource set (CORESET). The first CORESET is configurated with a first transmission configuration indication (TCI) state. The first TCI state is configured with one reference reference signal (RS). Furthermore, the reference RS is associated with a spatial receiver (Rx) parameter. In one embodiment, the first CORESET is further associated with a serving cell identity (ID). For example, the serving cell ID of a base station NW, TRP#1, or TRP#2. The UE receives a downlink control information (DCI) according to the SS set configuration (step S1320).

In one embodiment, a UE may receive a configuration to receive the DCI or the SS set associated with at least one of: a first resource type or a second resource type. The DCI may be, for example, PDCCH. The DL may be used for, for example, PDCCH. In one embodiment, the received DCI or SS set is associated with the first resource type and the second resource type.

In one embodiment, the first resource type is associated with a sub-band full duplex or a DL. The first resource type may be, for example, SBFD associated with a sub-band full duplex. However, the first resource type may be, for example, non-SBFD such as TDD with a DL. The second resource type may be, for example, SBFD associated with a sub-band full duplex. However, the second resource type may be, for example, non-SBFD such as TDD with a DL.

In one embodiment, the SS set is configured with a second CORESET, the second CORESET is configured with a second TCI state, the first CORESET is associated with a first resource type, and the second CORESET is associated with a second resource type. In one embodiment, in the case of the SS set monitored in the first resource type, UE may receive the DCI by the first CORESET with the first TCI state. In the case of the SS set monitored in the second resource type, UE may receive the DCI by the second CORESET with the second TCI state.

In one embodiment, a CORESET may be activated/configured with a New field for applying at least one of the following: e.g., non-SBFD symbols, SBFD symbols, or both non-SBFD and SBFD symbols. non-SBFD symbols:
UE may monitor an SS set associated with the CORESET in non-SBFD symbols.
UE may not expect to monitor an SS set associated with the CORESET in SBFD symbols.
SBFD symbols:
   UE may monitor an SS set associated with the CORESET in SBFD symbols.
   UE may not expect to monitor an SS set associated with the CORESET in non-SBFD symbols.
   Both of non-SBFD and SBFD symbols:
      UE may monitor an SS set associated with the CORESET in both SBFD symbols and non-SBFD symbols.

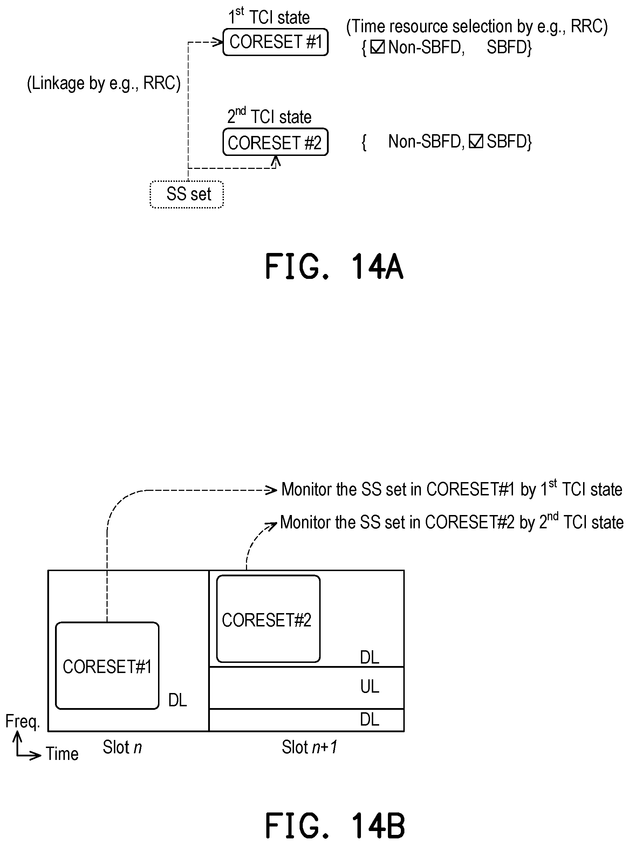

For example, FIG. 14A is a schematic diagram that illustrates one SS set associated with two control resource sets (CORESETs) according to an exemplary embodiment of the present disclosure, and FIG. 14B is a schematic diagram that illustrates a resource allocation for monitoring the SS set according to an exemplary embodiment of the present disclosure. Referring to FIG. 14A and FIG. 4B, CORESET #1 associated with the first TCI state is configured with non-SBFD, and CORESET #2 associated with the second TCI state is configured with SBFD. Then, UE may monitor the SS set in CORESET#1 by the first TCI state and monitor the SS set in CORESET#2 by the second TCI state. Then, UE receives DCI by CORESET #1 associated with the first TCI state and receives DCI by CORESET #2 associated with the second TCI state.

In one embodiment, a CORESET may be activated/configured with a New field for applying at least one of the following. e.g., both non-SBFD and SBFD symbols. UE may monitor an SS set associated with the CORESET in both SBFD symbols and non-SBFD symbols.

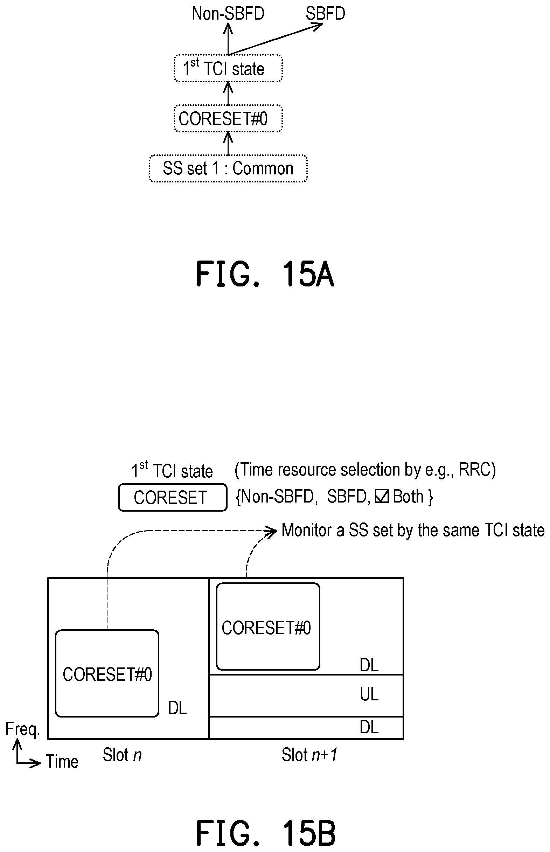

For example, FIG. 15A is a schematic diagram that illustrates an SS set of common type used for non-SBFD and SBFD symbols according to an exemplary embodiment of the present disclosure, and FIG. 15B is a schematic diagram that illustrates a resource allocation for monitoring the SS set according to an exemplary embodiment of the present disclosure. Referring to FIG. 15A and FIG. 15B, one SS set ID may be associated/configured with one or more than one CORESET ID. The type of the SS set may be the common type, and its ID is 0. The first TCI state associated with the CORESET ID is associated/configured with both SBFD symbols and non-SBFD symbols. Therefore, UE may monitor an SS set by the same TCI state, e.g., the first TCI state.

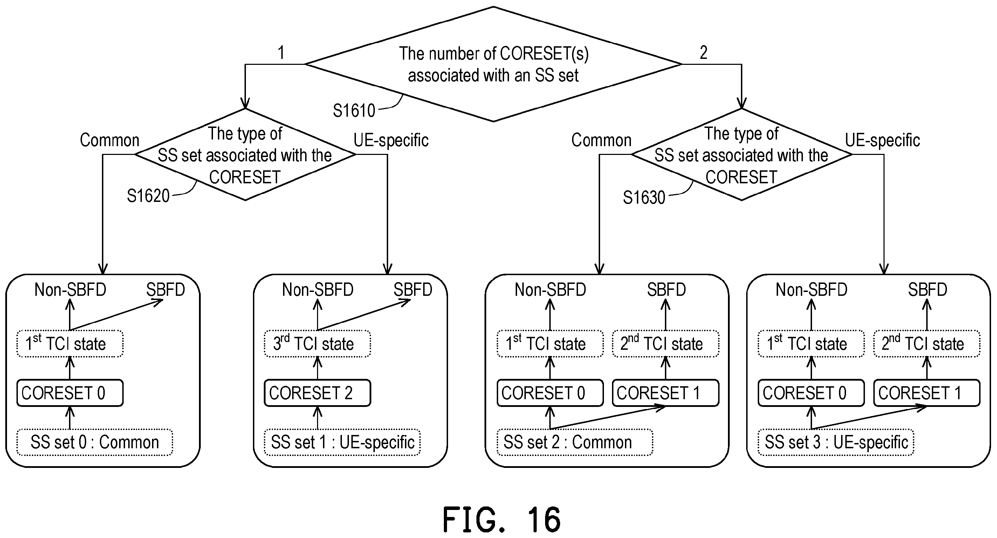

FIG. 16 is a flow chart that illustrates an SS set associated with one or two CORESETs according to an exemplary embodiment of the present disclosure. Referring to FIG. 16, to identify the association of an SS set, UE may identify the number of CORESET(s) associated with the SS set (Step S1610). When (or in the case that) one CORESET is associated with the SS set, UE may identify the type of the SS set associated with the CORESET (step S1620). When (or in the case that) the type of the SS set is the common type, one TCI state, e.g., the first TCI state, associated with the CORESET ID, e.g., 0, is associated/configured with both SBFD symbols and non-SBFD symbols. When (or in the case that) the type of the SS set is the UE-specific type, one TCI state, e.g., the third TCI state, associated with the CORESET ID, e.g., 2, is associated/configured with both SBFD symbols and non-SBFD symbols.

When (or in the case that) two CORESETs are associated with the SS set, UE may identify the type of the SS set associated with the CORESETs (step S1630). When (or in the case that) the type of the SS set is the common type, two TCI states, e.g., the first TCI state and the second TCI state, associated with the CORESET IDs, e.g., 0 and 1, are associated/configured with non-SBFD symbols and SBFD symbols, respectively. When (or in the case that) the type of the SS set is the UE-specific type, two TCI states, e.g., the first TCI state and second TCI state, associated with the CORESET IDs, e.g., 0 and 1, are associated/configured with non-SBFD symbols and SBFD symbols, respectively.

In one embodiment, the first CORESET is configured with a second TCI state, the first TCI state is associated with a first resource type, and the second TCI state is associated with a second resource type. That is one CORESET is configured with two TCI states respectively associated with different resource types.

In one embodiment, the SS set is configured with a type of user equipment (UE) specific, and UE may receive the DCI by the first CORESET with the first TCI state in the case of the SS set monitored in the first resource type, and/ or the UE may receive the DCI by the first CORESET with the second TCI state in the case of the SS set monitored in the second resource type.

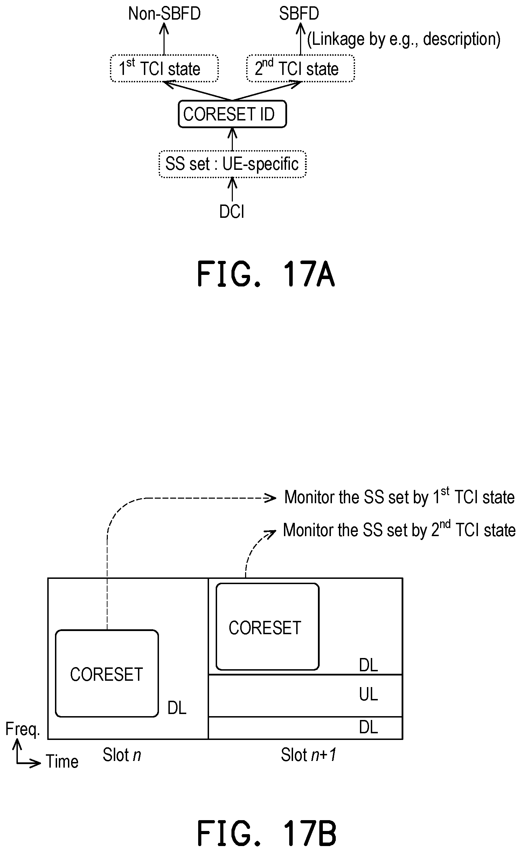

FIG. 17A is a schematic diagram that illustrates an SS set of UE-specific type used for non-SBFD and SBFD symbols according to an exemplary embodiment of the present disclosure. Referring to FIG. 17A, a CORESET may be activated/configured with a first TCI state and/or a second TCI state, where
non-SBFD symbols are associated with the first TCI state,
SBFD symbols are associated with the second TCI state.

FIG. 17B is a schematic diagram that illustrates a resource allocation for monitoring SS set according to an exemplary embodiment of the present disclosure. Referring to FIG. 17B, when (or in the case that) monitoring a first search space occurs in both SBFD and non-SBFD symbols and/or the first SS is configured with UE-specific as shown in FIG. 17A,
UE may monitor the first search space in non-SBFD symbols by the first TCI state, and/ or UE may monitor the first search space in SBFD symbols by the second TCI state.
Then, UE may receive the DCI by the CORESET with the first TCI state if the UE-specific SS set is monitored by the first TCI state. Alternatively or furthermore, UE may receive the DCI by the CORESET with the second TCI state if the UE-specific SS set is monitored by the second TCI state.

In one embodiment, the first CORESET is configured with a second TCI state, the first TCI state is associated with a first resource type, and the second TCI state is associated with a second resource type. That is one CORESET is configured with two TCI states respectively associated with different resource types. In one embodiment, the SS set is configured with a type of common, and UE may receive the DCI according to the SS set configuration in the first resource type and the second resource type by the first TCI state.

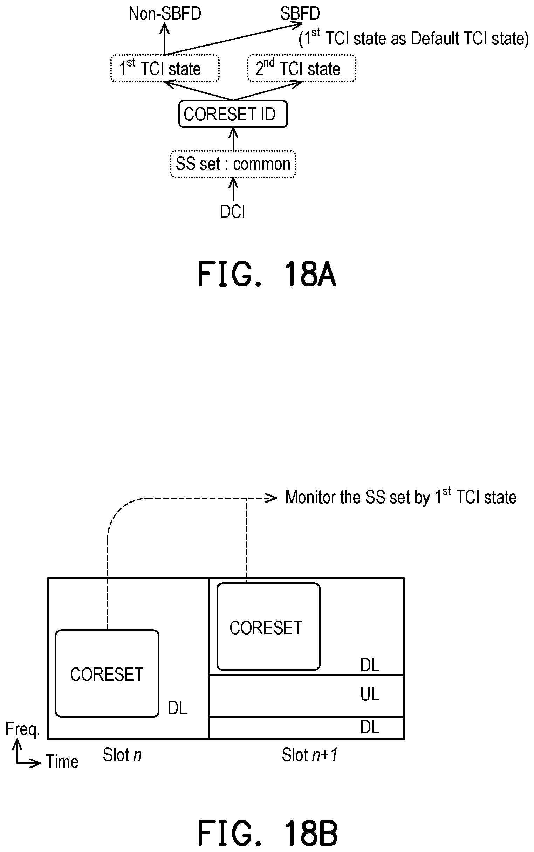

FIG. 18A is a schematic diagram that illustrates an SS set of common type used for non-SBFD and SBFD symbols according to an exemplary embodiment of the present disclosure. Referring to FIG. 18A, a CORESET may be activated/configured with a first TCI state and/or a second TCI state, where
non-SBFD symbols are associated with the first TCI state,
SBFD symbols are associated with the second TCI state.

FIG. 18B is a schematic diagram that illustrates a resource allocation for monitoring the SS set according to an exemplary embodiment of the present disclosure. Referring to FIG. 18B, when (or in the case that) monitoring a first search space occurs in both SBFD and non-SBFD symbols and/or the first SS is configured with a common type as shown in FIG. 18A, UE may monitor the first search space in non-SBFD symbols and SBFD symbols by the first TCI state or the second TCI state (e.g., according to RRC/MAC CE/DCI), where the first TCI state or the second TCI state may be the lowest ID (or highest ID) among the activated TCI states. Then, UE may receive the DCI in the non-SBFD resource and the SBFD resource by the first TCI state.

In one embodiment, the first CORESET is configured with a second TCI state (i.e., one CORESET configured with two different TCI states), and UE may receive a new field configuration for a determination of TCI state association. The TCI state association is the association with a specific TCI state and a specific resource type.

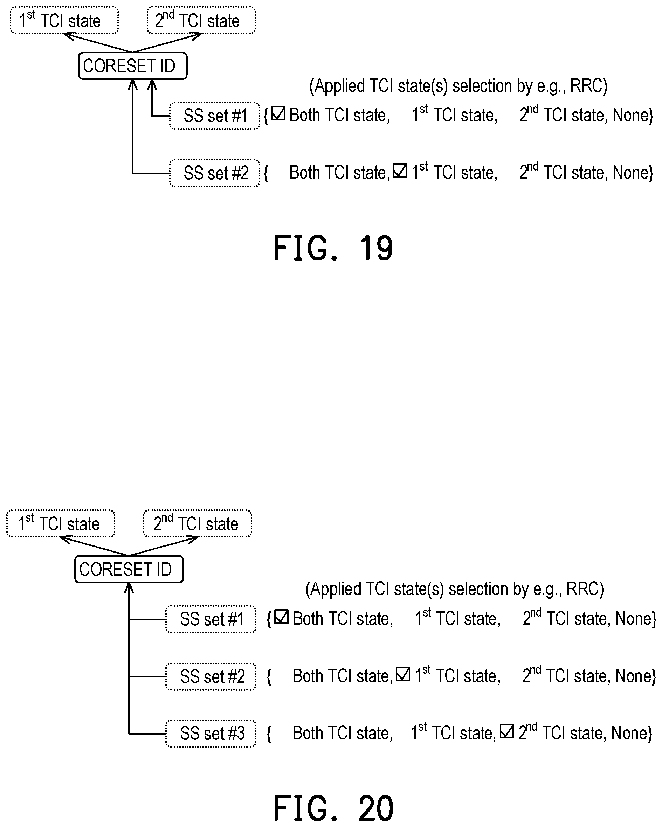

FIG. 19 is a schematic diagram that illustrates two SS sets used for non-SBFD and SBFD symbols according to an exemplary embodiment of the present disclosure. Referring to FIG. 19, when (or in the case that) monitoring a search space may occur in SBFD and/or non-SBFD symbols,
the search space may be configured with a NEW field for applying at least one of the following. e.g.,
both the first TCI state and the second TCI state: non-SBFD symbols associated with the first TCI state and SBFD symbols associated with the second TCI state;
the first TCI state;
the second TCI state. That is the TCI state association is, for example, one of the non-SBFD symbols associated with the first TCI state and SBFD symbols associated with the second TCI state, the first TCI state associated with non-SBFD symbols and SBFD symbols, or the second TCI state associated with non-SBFD symbols and SBFD symbols.
In one embodiment, when (or in the case that) the field is not configured, UE may apply a default rule for determining the TCI state for SS monitoring, e.g., apply the first TCI state.

For example, the SS set #1, e.g., UE-specific SS set (or common SS set for advanced UEs), is configured with both the first TCI state and the second TCI state, monitored by the first TCI state in non-SBFD symbols, and monitored by the second TCI state in SBFD symbols. The SS set #2, e.g., a common SS set that may be transparent for UEs without SBFD capability, is configured with only the first TCI state, and monitored by the first TCI state in non-SBFD symbols and SBFD symbols.

In one embodiment, in a case that the SS set is configured to select both the first TCI state and the second TCI state according to the new field configuration, UE may receive the DCI by the first TCI state in a first resource type, and the UE may receive the DCI by the second TCI state in a second resource type. That is the the TCI state association is the non-SBFD symbols associated with the first TCI state and SBFD symbols associated with the second TCI state. Taking FIG. 19 as an example, the SS set #1 is configured to select both the first TCI state and the second TCI state, and UE may receive the DCI by the first TCI state in non-SBFD symbols, and the UE may receive the DCI by the second TCI state in SBFD symbols.

In one embodiment, in a case that the SS set is configured to select either the first TCI state or the second TCI state according to the new field configuration, UE may receive the DCI in the first resource type and the second resource type by either the first TCI state or the second TCI state, respectively. That is the the TCI state association is the first TCI state associated with non-SBFD symbols and SBFD symbols, or the second TCI state associated with non-SBFD symbols and SBFD symbols. Taking FIG. 19 as an example, SS set #2 is configured to select the first TCI state, and UE may receive the DCI by the first TCI state in non-SBFD symbols and SBFD symbols.

FIG. 20 is a schematic diagram that illustrates three SS sets used for non-SBFD and SBFD symbols according to an exemplary embodiment of the present disclosure. Referring to FIG. 20, when (or in the case that) monitoring a search space may occur in SBFD and/or non-SBFD symbols,
the search space may be configured with a NEW field for applying at least one of the following. e.g.,
both the first TCI state and the second TCI state: non-SBFD symbols associated with the first TCI state and SBFD symbols associated with the second TCI state;
the first TCI state;
the second TCI state.
In one embodiment, when (or in the case that) the field is not configured, UE may apply a default rule for determining the TCI state for SS monitoring, e.g., apply the first TCI state.

For example, the SS set #1, e.g., UE-specific SS set (or common SS set for advanced UEs), is configured with both the first TCI state and the second TCI state, monitored by the first TCI state in non-SBFD symbols, and monitored by the second TCI state in SBFD symbols. The SS set #2, e.g., common SS set, is configured with only the first TCI state, and monitored by the first TCI state in non-SBFD symbols and SBFD symbols. The SS set #3, e.g., UE-specific SS set, is configured with only the second TCI state, and monitored by second TCI state in SBFD symbols but may expect the SS set monitored in non-SBFD symbols.

In one embodiment, in the case that the SS set is configured to select either the first TCI state or the second TCI state according to the new field configuration, UE may receive the DCI by the first TCI state in the first resource type by the first TCI state or in the second resource type by the second TCI state, respectively. That is the the TCI state association is the first TCI state associated with non-SBFD symbols and SBFD symbols, or the second TCI state associated with non-SBFD symbols and SBFD symbols. Taking FIG. 20 as an example, SS set #3 is configured to select the second TCI state, and UE may receive the DCI by the second TCI state in SBFD symbols. Alternatively or furthermore, in the case that the SS set is configured to select either the first TCI state or the second TCI state according to the new field configuration, UE may not expect to receive the DCI in the second resource type or the first resource type, respectively. Taking FIG. 20 as an example, SS set #3 is configured to select the second TCI state, and UE may receive the DCI by the second TCI state in SBFD symbols, and/ or UE may not expect to receive the DCI in non-SBFD symbols.

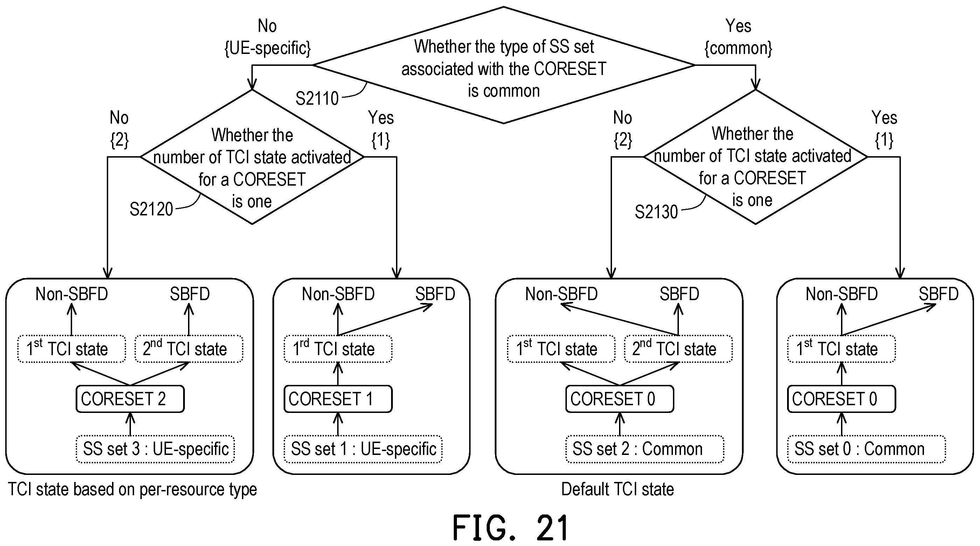

FIG. 21 is a flow chart that illustrates an SS set associated with one or two TCI states according to an exemplary embodiment of the present disclosure. Referring to FIG. 21, to identify the association of an SS set, UE may identify whether the type of the SS set associated with the CORESET is the common type (Step S2110). When (or in the case that) the type of the SS se is not the common type but is the UE-specific type, UE may identify whether the number of TCI state activated for the CORESET is one (step S2120). When (or in the case that) the number of TCI state activated for the CORESET is two (i.e., the determination is "no"), one CORESET ID, e.g., 2, associated with two TCI states, e.g., the first TCI state and the second TCI state, is associated/configured with SBFD symbols and non-SBFD symbols, respectively. When (or in the case that) the number of TCI state activated for the CORESET is one (i.e., the determination is "yes"), one CORESET ID, e.g., 1, associated with one TCI state, e.g., the first TCI state, is associated/configured with both SBFD symbols and non-SBFD symbols.

When (or in the case that) the type of the SS se is the UE-specific type, UE may identify whether the number of TCI state activated for the CORESET is one (step S2130). When (or in the case that) the number of TCI state activated for the CORESET is two (i.e., the determination is "no"), one CORESET ID, e.g., 0, associated with two TCI states, e.g., the first TCI state and the second TCI state, is associated/configured with both SBFD symbols and non-SBFD symbols for only one TCI state, e.g., the second TCI state. When (or in the case that) the number of TCI state activated for the CORESET is one (i.e., the determination is "yes"), one CORESET ID, e.g., 0, associated with one TCI state, e.g., the first TCI state, is associated/configured with both SBFD symbols and non-SBFD symbols.

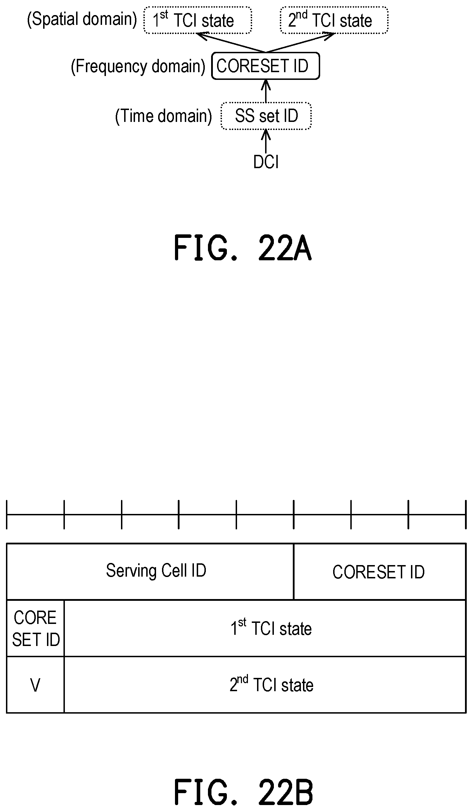

FIG. 22A is a schematic diagram that illustrates an association with two TCI states and CORESET identity (ID) according to an exemplary embodiment of the present disclosure, and FIG. 22B is a schematic diagram that illustrates a TCI state indication according to an exemplary embodiment of the present disclosure. Referring to FIG. 22A and FIG .22B, the at least one TCI State Indication for PDCCH may be applied if PDCCH for duplex operation (or SBFD) is configured. A CORESET may be activated/configured with a first TCI state and/or a second TCI state, where
the field "V" may indicate the functionality of at least one TCI state(s) indicated by i-th codepoint in the TCI field.
If this field "V" is set to "0", the second TCI state is not presented. If this field "V" is set to "1", the second TCI state is presented.

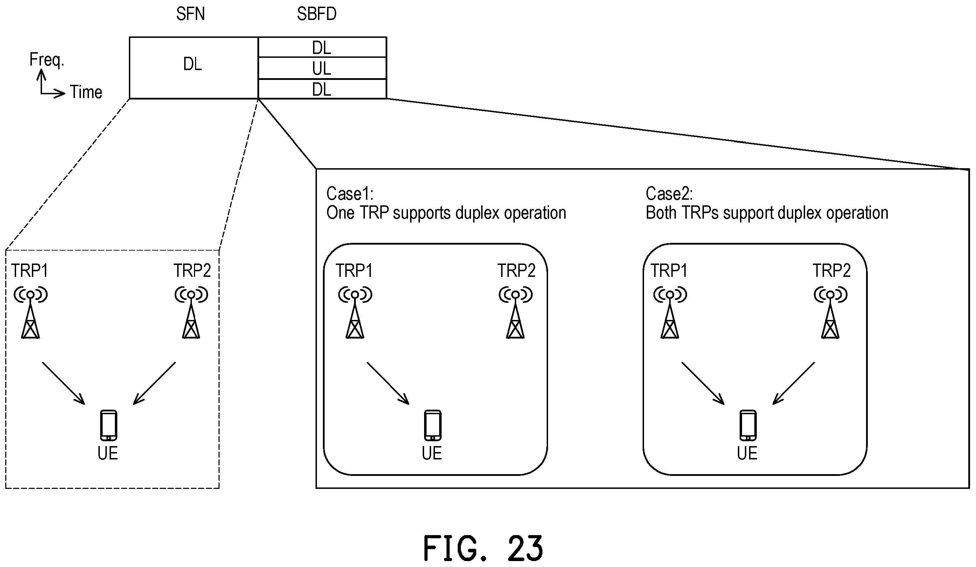

FIG. 23 is a schematic diagram that illustrates a co-existence with single frequency network (SFN) and SBFD according to an exemplary embodiment of the present disclosure. Referring to FIG. 23, UE may report the capability of SFBD and/or SFN. UE may be configured with SFN scheme and/or SFN scheme. In the SFN scheme, two TRPs may use the same resource. In the SFBD scheme, only one TRP supports duplex operation, or both TRPs support the duplex operation.

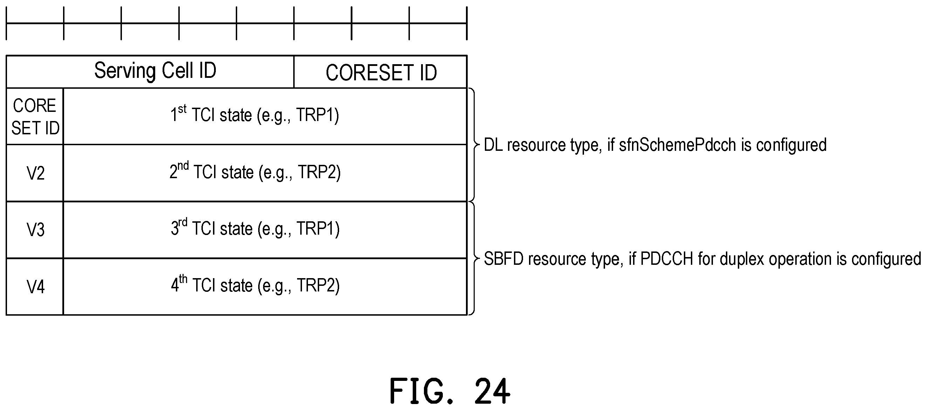

FIG. 24 is a schematic diagram that illustrates a TCI state indication according to an exemplary embodiment of the present disclosure. Referring to FIG. 24, when (or in the case that) "sfnSchemePdcch" is configured, a CORESET may be activated/configured with a first TCI state and/or a second TCI state. The field "V2" may indicate the functionality of at least one TCI state(s) indicated by i-th codepoint in the TCI field. For example, if this field "V2" is set to "0", the second TCI state is not presented. If this field "V2" is set to "1", the second TCI state is presented.

When (or in the case that) PDCCH for duplex operation (or SBFD) is configured, a CORESET may be activated/configured with a third TCI state and/or a fourth TCI state. The field "V3" may indicate the functionality of at least one TCI state(s) indicated by i-th codepoint in the TCI field. For example, If this field "V3" is set to "0", the third TCI state is not presented. If this field "V3" is set to "1", the third TCI state is presented. The field "V4" may indicate the functionality of at least one TCI state(s) indicated by i-th codepoint in the TCI field. For example, If this field "V4" is set to "0", the fourth TCI state is not presented. If this field "V4" is set to "1", the fourth TCI state is presented.

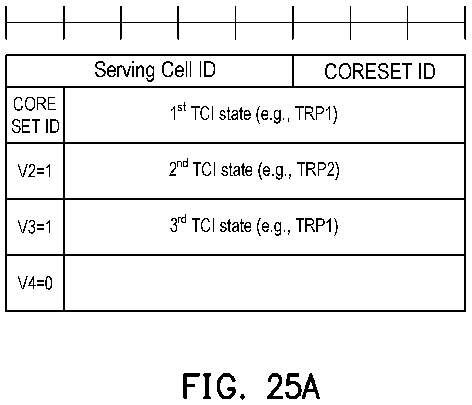

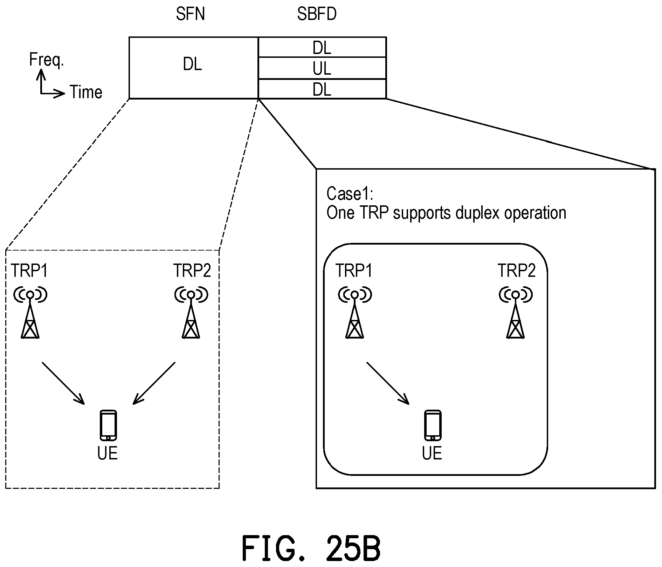

For example, FIG. 25A is a schematic diagram that illustrates a TCI state indication according to an exemplary embodiment of the present disclosure. Referring to FIG. 25A, the field "V2" is set to "1", the field "V3" is set to "1", and the field "V4" is set to "0". FIG. 25B is a schematic diagram that illustrates a co-existence with SFN and SBFD according to an exemplary embodiment of the present disclosure. Referring to FIG. 25B, in the SFN scheme, two TRPs use the same DL resource. In the SBFD scheme, only one TRP supports the duplex operation.

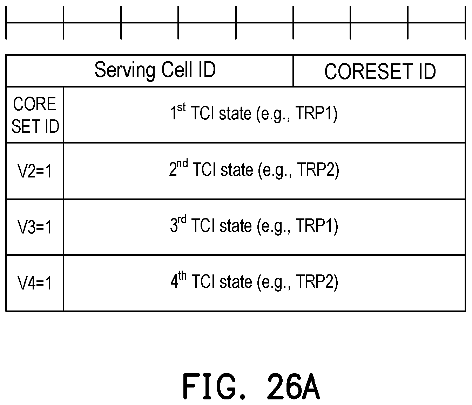

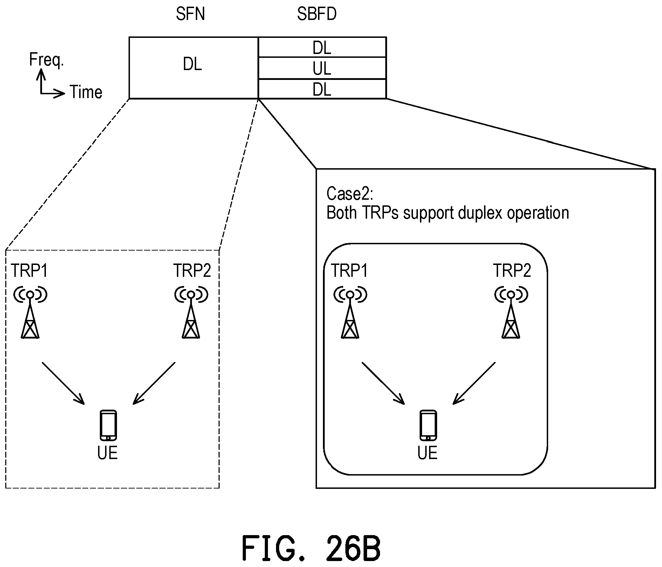

For example, FIG. 26A is a schematic diagram that illustrates a TCI state indication according to an exemplary embodiment of the present disclosure. Referring to FIG. 26A, the field "V2" is set to "1", the field "V3" is set to "1", and the field "V4" is set to "1". FIG. 26B is a schematic diagram that illustrates a co-existence with SFN and SBFD according to an exemplary embodiment of the present disclosure. Referring to FIG. 26B, in the SFN scheme, two TRPs use the same DL resource. In the SBFD scheme, both two TRPs support the duplex operation.

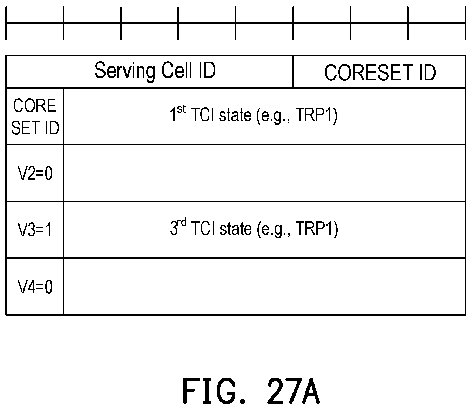

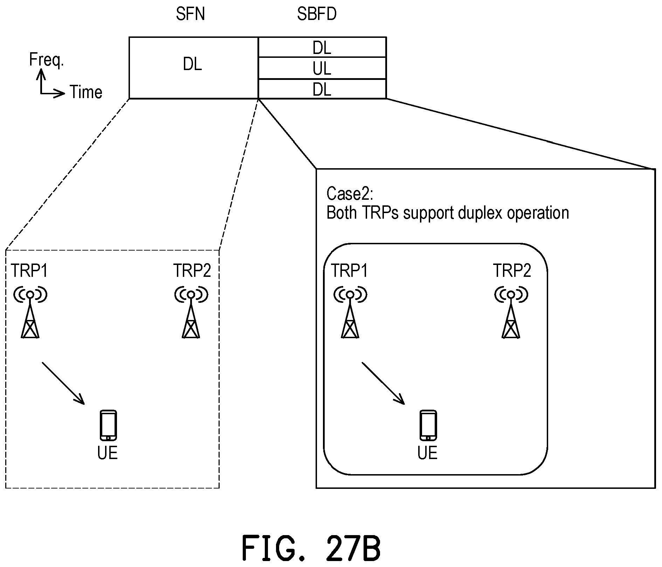

For example, FIG. 27A is a schematic diagram that illustrates a TCI state indication according to an exemplary embodiment of the present disclosure. Referring to FIG. 27A, the field "V2" is set to "0", the field "V3" is set to "1", and the field "V4" is set to "0". FIG. 27B is a schematic diagram that illustrates a co-existence with SFN and SBFD according to an exemplary embodiment of the present disclosure. Referring to FIG. 27B, in the SFN scheme, only one TRP uses the DL resource. In the SBFD scheme, only one TRP supports the duplex operation.

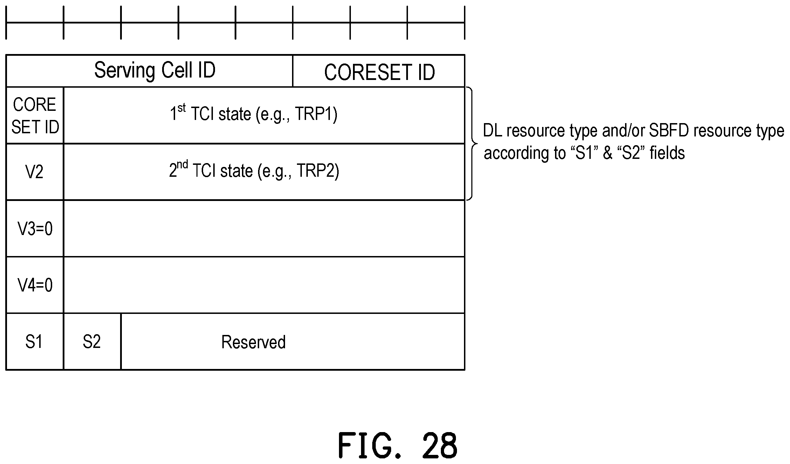

For example, FIG. 28 is a schematic diagram that illustrates a TCI state indication according to an exemplary embodiment of the present disclosure. Referring to FIG. 28, when (or in the case that) "sfnSchemePdcch" is configured, a CORESET may be activated/configured with a first TCI state and/or a second TCI state. When (or in the case that) PDCCH for duplex operation (or SBFD) is configured, a CORESET may be activated/configured with a third TCI state and/or a fourth TCI state. The fields "S1" and "S2" indicate the DL resource type and/or SBFD resource type. For example, if the field "S1" is set to "0", the first TCI state is used for DL resource type only. If the field "S1" is set to "1", the first TCI state is used for DL and SBFD resource types. If the field "S2" is set to "0", the second TCI state is used for DL resource type only. If the field "S2" is set to "1", the second TCI state is used for DL and SBFD resource types.

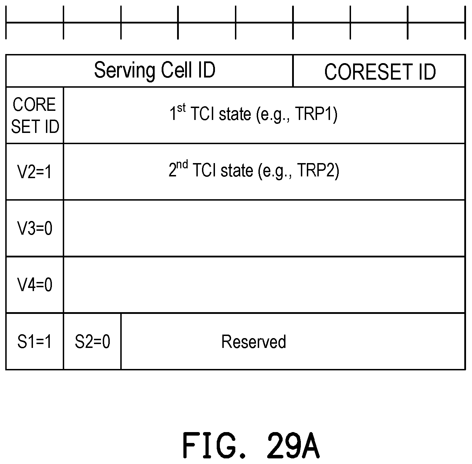

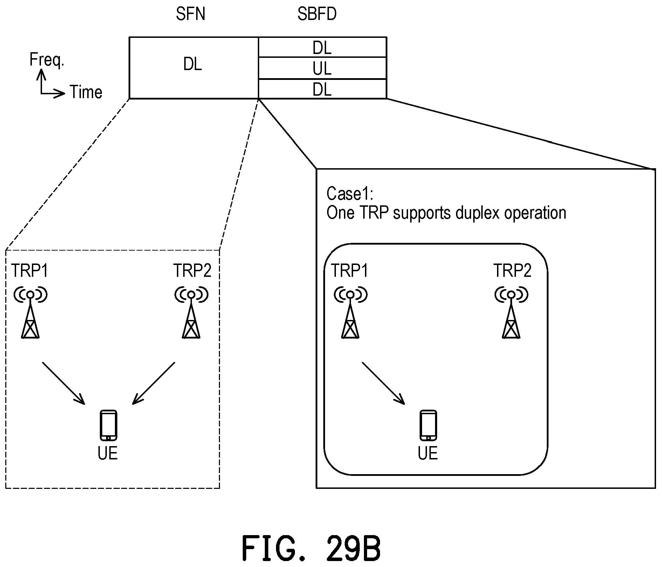

For example, FIG. 29A is a schematic diagram that illustrates a TCI state indication according to an exemplary embodiment of the present disclosure. Referring to FIG. 29A, the field "V2" is set to "1", the field "V3" is set to "0", the field "V4" is set to "0", the field "S1" is set to "1, and the field "S2" is set to "0". FIG. 29B is a schematic diagram that illustrates a co-existence with SFN and SBFD according to an exemplary embodiment of the present disclosure. Referring to FIG. 29B, in the SFN scheme, two TRPs use the same DL resource. In the SBFD scheme, only one TRP supports the duplex operation.

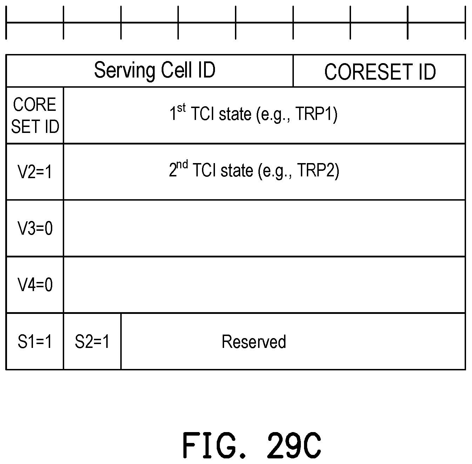

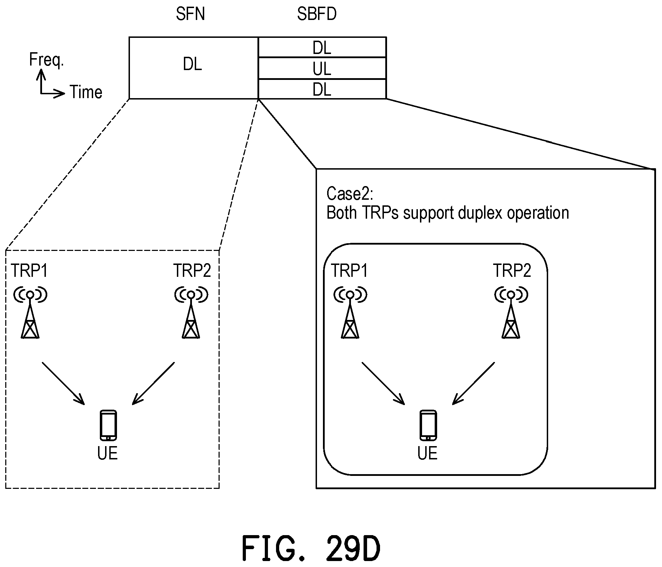

For example, FIG. 29C is a schematic diagram that illustrates a TCI state indication according to an exemplary embodiment of the present disclosure. Referring to FIG. 29C, the field "V2" is set to "1", the field "V3" is set to "0", the field "V4" is set to "0", the field "S1" is set to "1, and the field "S2" is set to "1". FIG. 29D is a schematic diagram that illustrates a co-existence with SFN and SBFD according to an exemplary embodiment of the present disclosure. Referring to FIG. 29D, in the SFN scheme, two TRPs use the same DL resource. In the SBFD scheme, both two TRPs support the duplex operation.

In one embodiment, UE may not expect to monitor the SS set in the symbols where the corresponding CORESET and the UL subband are fully/partially overlapped. In one embodiment, when the PDCCH reception includes two PDCCH from two respective search space sets, for one of the purposes of determining the time offset between the reception of the DL DCI and the corresponding PDSCH, the PDCCH candidate that ends later in time may be used. If one SS set of the linked SS sets in PDCCH repetition is not monitored, the PDCCH candidate associated with the monitored SS may be used.

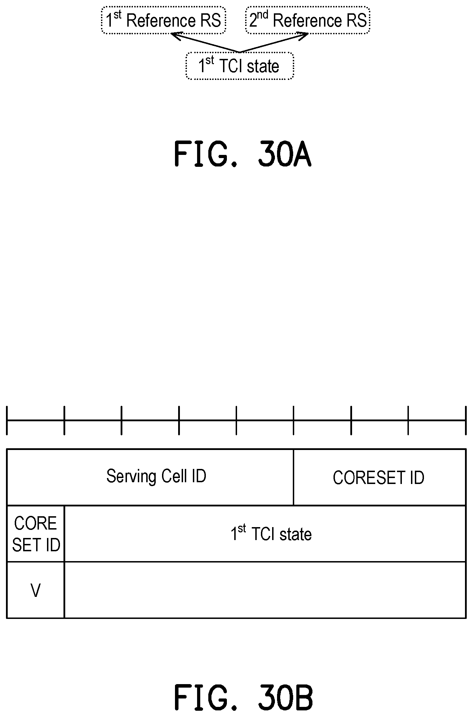

FIG. 30A is a schematic diagram that illustrates an association with a TCI state and two reference RSs according to an exemplary embodiment of the present disclosure. Referring to FIG. 30A, a TCI state may be configured with up to two reference RSs, i.e., first reference RS e.g., for first QCL-typeD and second reference RS e.g., for second QCL-typeD.

FIG. 30B is a schematic diagram that illustrates a TCI state indication according to an exemplary embodiment of the present disclosure. Referring to FIG. 30B, the at least one TCI State Indication for PDCCH may be applied when (or in the case that) PDCCH for duplex operation (or SBFD) is configured. A CORESET may be activated/configured with a first TCI state, where
the field "V" may indicate whether the second reference RS is presented in the corresponding CORESET. If this field "V" is set to "0", the second reference RS is not presented. If this field "V" is set to "1", the second reference RS is presented.

In one embodiment, the first TCI state is configured with a second reference RS, the first reference RS is associated with a first resource type, and the second reference RS is associated with a second resource type. That is one TCI state is configured with two different reference RSs respectively associated with different resource types.

In one embodiment, the SS set is configured with a type of UE-specific, UE may receive the DCI by the first TCI state with the first reference RS in the case of the SS set monitored in the first resource type, and/ or UE may receive the DCI by the first TCI state with the second reference RS in a case of the SS set monitored in the second resource type.

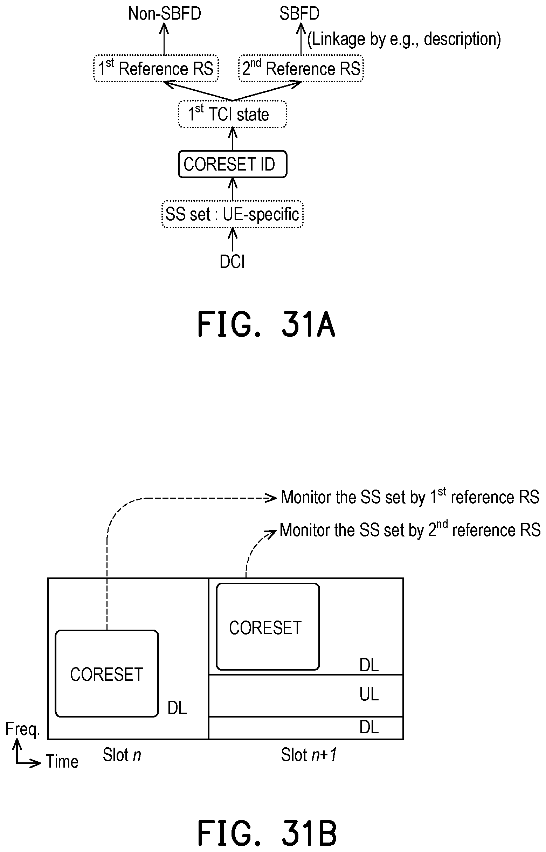

FIG. 31A is a schematic diagram that illustrates an association with an SS set of UE-specific type and two reference RSs according to an exemplary embodiment of the present disclosure. Referring to FIG. 31A, a TCI state may be activated/configured with a first reference RS and/or a second reference RS, where
non-SBFD symbols are associated with the first reference RS,
SBFD symbols are associated with the second reference RS.

FIG. 31B is a schematic diagram that illustrates a resource allocation for monitoring the SS set according to an exemplary embodiment of the present disclosure. Referring to FIG. 31B, when (or in the case that) monitoring a first search space occurs in both SBFD and non-SBFD symbols and/or the first SS is configured with UE-specific type,
UE may monitor the first search space in non-SBFD symbols by the TCI state associated with the first reference RS, and/ or
UE may monitor the first search space in SBFD symbols by the TCI state associated with the second reference RS. Then, UE may receive the DCI by the first TCI state with the first reference RS if the UE-specific SS set is monitored in non-SBFD symbols, and/ or the UE may receive the DCI by the first TCI state with the second reference RS if the UE-specific SS set is monitored in SBFD symbols.

In one embodiment, the first TCI state is configured with a second reference RS, the first reference RS is associated with a first resource type, and the second reference RS is associated with a second resource type. That is one TCI state is configured with two different reference RSs respectively associated with different resource types. In one embodiment, the SS set is configured with a type of common, and UE may receive the DCI according to the SS set configuration in the first resource type and the second resource type by the first reference RS.

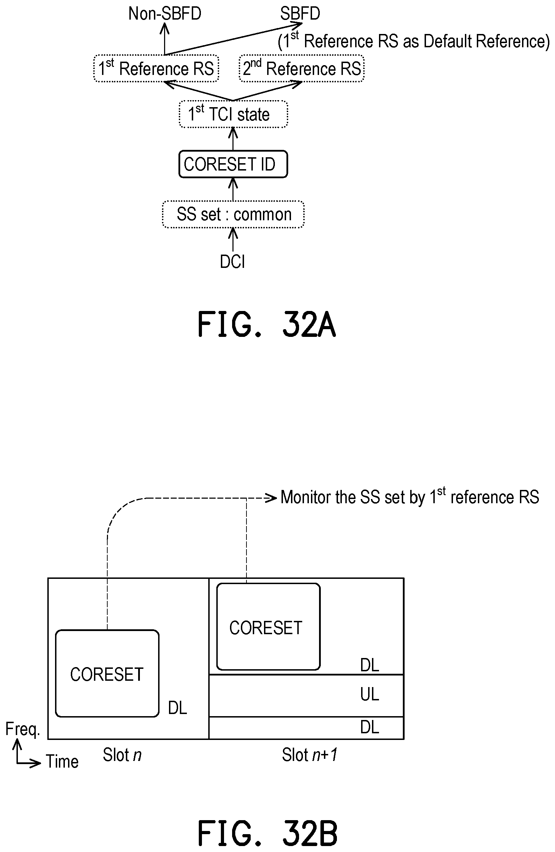

FIG. 32A is a schematic diagram that illustrates an association with an SS set of common type and one reference RS according to an exemplary embodiment of the present disclosure. Referring to FIG. 32A, a TCI state may be activated/configured with a first reference RS and a second reference RS, where
non-SBFD symbols are associated with the first reference RS,
SBFD symbols are associated with the second reference RS.

FIG. 32B is a schematic diagram that illustrates a resource allocation for monitoring the SS set according to an exemplary embodiment of the present disclosure. Referring to FIG. 32B, when (or in the case that) monitoring a first search space occurs in both SBFD and non-SBFD symbols and/or the first SS is configured with common,
UE may monitor the first search space in non-SBFD symbols and SBFD symbols by the TCI state associated with the first reference RS or the second reference RS(e.g., according to RRC/MAC CE/DCI), where
the first reference RS or the second reference RS may be the lowest ID (or highest ID) among the reference RSs. Then, UE may receive the DCI in both SBFD and non-SBFD symbols by the first reference RS or the second reference RS.

In one embodiment, the first TCI state is configured with a second reference RS (i.e., one TCI state configured with two different reference RSs), and UE may receive a new field configuration for a determination of TCI state association. The TCI state association is the association with a specific reference RS associated with one TCI state and a specific resource type.

In one embodiment, in the case that the SS set is configured to select both the first reference RS and the second reference RS according to the new field configuration, UE may receive the DCI by the first reference RS in a first resource type and receive the DCI by the second reference RS in a second resource type.

In one embodiment, in the case that the SS set is configured to select either the first reference RS or the second reference RS according to the new field configuration, UE may receive the DCI in the first resource type and the second resource type by either the first TCI state or the second TCI state, respectively.

In one embodiment, in the case that the SS set is configured to select either the first reference RS or the second reference RS according to the new field configuration, UE may receive the DCI in the first resource type by the first TCI state or in the second resource type the second TCI state, respectively, and/ or the UE may not expect to receive the DCI in the second resource type or in the first resource type, respectively.

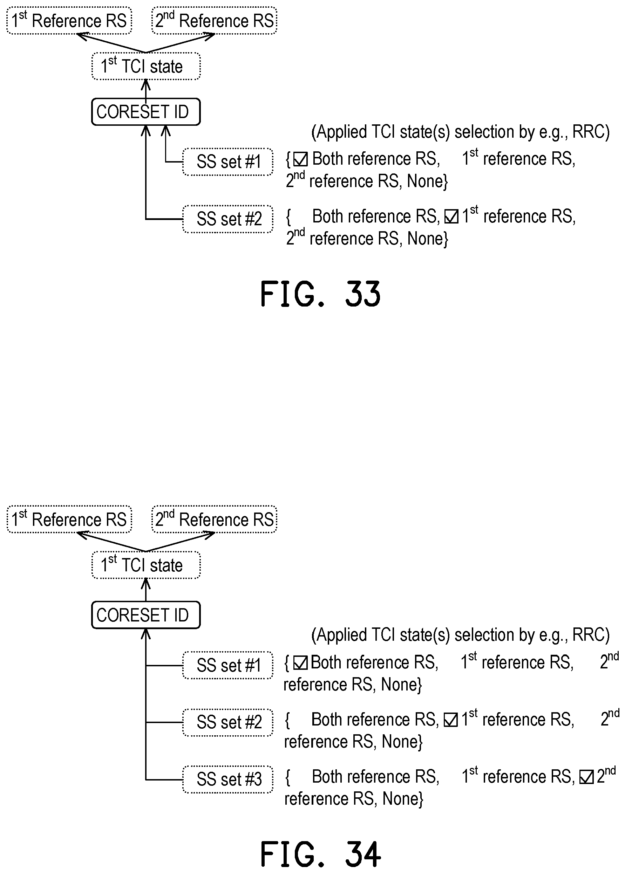

FIG. 33 is a schematic diagram that illustrates an association with two SS sets and two reference RSs according to an exemplary embodiment of the present disclosure. Referring to FIG. 33, when (or in the case that) monitoring a search space may occur in SBFD and/or non-SBFD symbols,
the search space may be configured with a NEW field for applying at least one of the following. e.g.,
Both the first reference RS and the reference RS:
   non-SBFD symbols associated with the first reference RS,
   SBFD symbols associated with the second reference RS;
   The first reference RS;
   The second reference RS. That is the TCI state association is, for example, one of the non-SBFD symbols associated with the first reference RS and SBFD symbols associated with the second reference RS, the first reference RS associated with non-SBFD symbols and SBFD symbols, or the second reference RS associated with non-SBFD symbols and SBFD symbols.
   In one embodiment, when (or in the case that)the field is not configured, UE may apply a default rule for determining the reference for SS monitoring, e.g., apply the first reference RS.

For example, the SS set #1, e.g., a UE-specific SS set (or common SS set for advanced UEs), is configured with both the first reference RS and the second reference RS, monitored by the first reference RS in non-SBFD symbols, and monitored by the second reference RS in SBFD symbols. Then, UE may receive the DCI by the first reference RS in non-SBFD symbols and receive the DCI by the second reference RS in SBFD symbols. The SS set #2, e.g., a common SS set that may be transparent for UEs without SBFD capability, is configured with only the first reference RS, and monitored by the first reference RS in non-SBFD symbols and SBFD symbols. Then, UE may receive the DCI by the first TCI state or the second TCI state in non-SBFD symbols and SBFD symbols, respectively.

FIG. 34 is a schematic diagram that illustrates an association with two SS sets and three reference RSs according to an exemplary embodiment of the present disclosure. Referring to FIG. 34, when (or in the case that) monitoring a search space may occur in SBFD and/or non-SBFD symbols, the search space may be configured with a NEW field for applying at least one of the following. e.g.,
Both the first reference RS and the reference RS:
non-SBFD symbols associated with the first reference RS,
SBFD symbols associated with the second reference RS;
The first reference RS;
The second reference RS.
In one embodiment, when (or in the case that) the field is not configured, UE may apply a default rule for determining the reference for SS monitoring, e.g., apply the first reference RS.

For example, the SS set #1, e.g., a UE-specific SS set (or common SS set for advanced UEs), is configured with both the first reference RS and the second reference RS, monitored by the first reference RS in non-SBFD symbols, and monitored by the second reference RS in SBFD symbols. The SS set #2, e.g., a common SS set, is configured with only the first reference RS, and monitored by the first reference RS in non-SBFD symbols and SBFD symbols. The SS set #3, e.g., a common SS set, is configured with only the second reference RS in, e.g., SBFD symbols, and UE may expect the SS set monitored in non-SBFD symbols. Then, UE may receive the DCI by the first TCI state in non-SBFD symbols and may not expect to receive DCI in SBFD symbols.

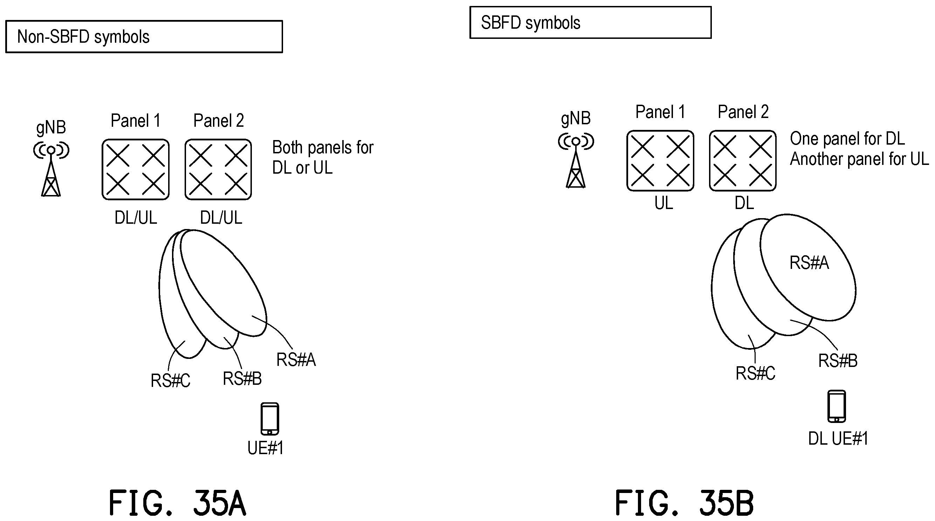

FIG. 35A is a schematic diagram that illustrates one RS associated with non-SBFD symbols according to an exemplary embodiment of the present disclosure, and FIG. 35B is a schematic diagram that illustrates one RS associated with SBFD symbols according to an exemplary embodiment of the present disclosure. Referring to FIG. 35A and FIG. 35B, a base station NW may prepare one set of RSs for beam management, where the set is shared for non-SBFD and SBFD resources. The same set for non-SBFD (e.g., first CSI report) and/or for SBFD (e.g., second CSI report). For example, the set of RSs is the combination of RS#A, #B, and #C.

In one embodiment, regarding the capability of UE is Capability #1, a RS received by the same Rx beam. Beam tracing for one TCI/RS is performed by one Rx beam. For non-SBFD and SBFD symbols, TCI (RS) is the first TCI state (RS#A), and Rx beam is Rx beam#1.

In one embodiment, regarding the capability of advanced UE is Capability #2, a RS received by different Rx beams. Beam tracing for one TCI/RS is performed by multiple Rx beams. For non-SBFD symbols, TCI (RS) is the first TCI state (e.g., RS#A), and Rx beam is Rx beam#1. For SBFD symbols, TCI (RS) is the first TCI state (e.g., RS#A), and Rx beam is Rx beam#2.

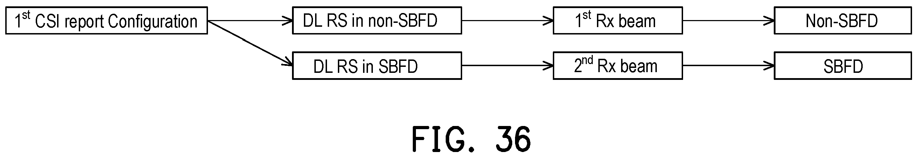

FIG. 36 is a schematic diagram that illustrates CSI report configuration for two Rx beams according to an exemplary embodiment of the present disclosure. Referring to FIG. 36, according to the capability of UE, the UE may maintain up to two Rx beams for a RS (e.g., CSI-RS) in a CSI report, where
the first Rx beam may correspond to a DL RS in non-SBFD resource, and the second Rx beam may correspond to the DL RS in SBFD resource.

In one embodiment, the first reference RS is associated with a second spatial Rx parameter, the first spatial Rx parameter is associated with a first resource type, and the second spatial Rx parameter is associated with a second resource type. That is one reference RS is associated with two different spatial Rx parameters respectively associated with different resource types. Each spatial Rx parameter is associated with a specific Rx beam.

In one embodiment, the SS set is configured with a type of UE-specific, UE may receive the DCI by the first TCI state with the first spatial Rx parameter in a case of the SS set monitored in the first resource type, and/ or UE may receive the DCI by the first TCI state with the second spatial Rx parameter in a case of the SS set monitored in the second resource type.

In one embodiment, the SS set is configured with a type of common, and UE may receive the DCI according to the SS set configuration in the first resource type and the second resource type.

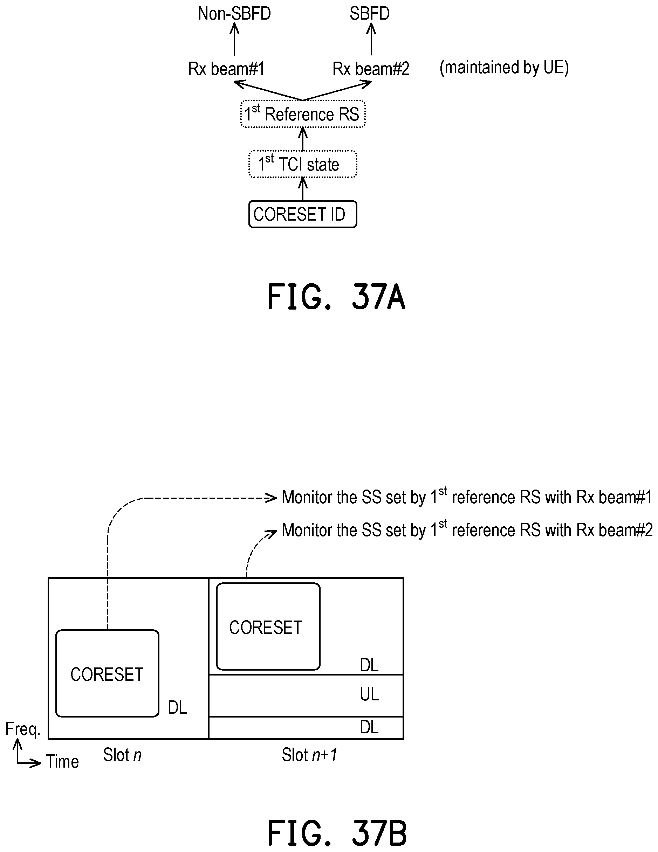

FIG. 37A is a schematic diagram that illustrates an association with one CORESET ID and two Rx beams according to an exemplary embodiment of the present disclosure, and FIG. 37B is a schematic diagram that illustrates a resource allocation for monitoring SS set according to an exemplary embodiment of the present disclosure. Referring to FIG. 37A and FIG. 37B, when (or in the case that) monitoring a first search space occurs in both SBFD and non-SBFD symbols, UE may monitor the first search space in non-SBFD symbols by the first reference RS with Rx beam #1, and/ or
UE may monitor the first search space in SBFD symbols by the first reference RS with Rx beam #2. Then, UE may receive the DCI by the first TCI state with the Rx beam #1 in the case of the UE-specific SS set monitored in the non-SBFD symbols, and/ or UE may receive the DCI by the first TCI state with the Rx beam #2 in the case of the UE-specific SS set monitored in the SBFD symbols. Alternatively, UE may receive the DCI with Rx beam #1 in the non-SBFD symbols and with Rx beam #2 in the BFD symbols in the case of the common SS set monitored in the SBFD symbols.

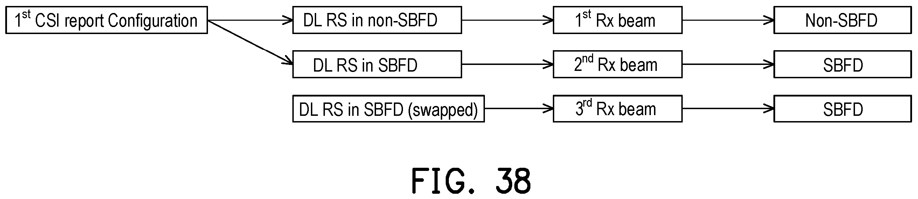

FIG. 38 is a schematic diagram that illustrates a CSI report configuration for three Rx beams according to an exemplary embodiment of the present disclosure. Referring to FIG. 38, according to the capability of UE, the UE may maintain up to 3 Rx beams for a RS (e.g., CSI-RS) in a CSI report, where
the first Rx beam may correspond to a DL RS in non-SBFD resource, and/ or
the second Rx beam may correspond to the DL RS in SBFD resource, and/ or
the third Rx beam may correspond to the DL RS in SBFD resource (swapped).

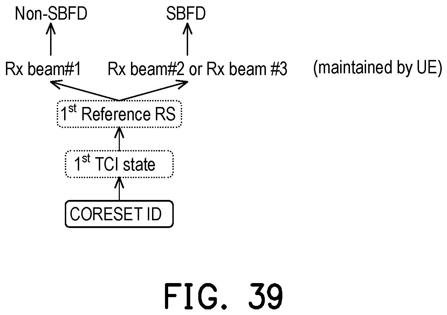

FIG. 39 is a schematic diagram that illustrates an association with one CORESET ID and three Rx beams according to an exemplary embodiment of the present disclosure. Referring to FIG. 39, when (or in the case that) monitoring a first search space occurs in both SBFD and non-SBFD symbols,
UE may monitor the first search space in non-SBFD symbols by Rx beam #1. In one embodiment, when (or in the case that) the quality of reported RS without panel swapping is larger than the quality of reported RS with panel swapping, UE may monitor the first search space in SBFD symbols by Rx beam #2. In one embodiment, when (or in the case that) the quality of reported RS with panel swapping is larger than the quality of reported RS without panel swapping, UE may monitor the first search space in SBFD symbols by Rx beam #3.

In one embodiment, the first reference RS is associated with a second spatial Rx parameter, the first spatial Rx parameter is associated with a first CSI report configuration, and the second spatial Rx parameter is associated with a second CSI report configuration. That is one reference RS is associated with two different spatial Rx parameters respectively associated with different CSI report configurations. Each spatial Rx parameter is associated with a specific Rx beam.

In one embodiment, the first CORESET is configured with the first CSI report configuration or the second CSI report configuration, and UE may receive the DCI according to the SS set configuration in the first resource type or the second resource type, respectively.

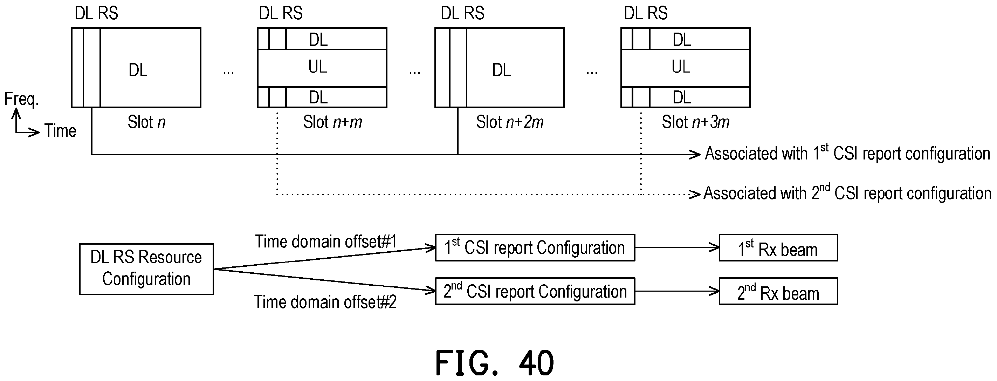

FIG. 40 is a schematic diagram that illustrates an association with two CSI report configurations and two Rx beams according to an exemplary embodiment of the present disclosure. Referring to FIG. 40, according to the capability of UE, the UE may maintain up to two Rx beams for a RS (e.g., CSI-RS) in one or more than one CSI report, where
the first Rx beam may correspond to a DL RS in non-SBFD resource, and/ or the second Rx beam may correspond to the DL RS in SBFD resource.

In one embodiment, the first Rx beam may be associated with the first CSI report configuration, and the second Rx beam may be associated with the second CSI report configuration. However, in some embodiments, UE may not know the relation between CSI report configuration and resource type in this case which means UE may not determine the Rx beam for monitoring the SS set according to the resource type.

In one embodiment, the first CSI report configuration corresponding to the non-SBFD resource is configurated with the first time domain offset, e.g., time domain offset #1, and the second CSI report configuration corresponding to the non-SBFD resource is configurated with the second time domain offset, e.g., time domain offset #2. For example, the time domain offset #1 corresponds to time slot *n* and time slot *n+2m,* where *n* and *m* are positive integers. The time domain offset #2 corresponds to time slot *n+m* and time slot *n+3m,* where *n* and *m* are positive integers.

In one embodiment, the at least one TCI State Indication for PDCCH may be applied if PDCCH for duplex operation (or SBFD) is configured. A CORESET may be activated/configured with a first TCI state.

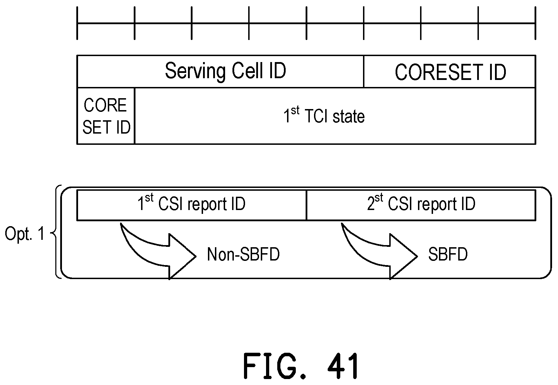

In one embodiment, in option 1, the field "CSI report ID" may indicate the Rx beam associated with CSI report ID. For example, FIG. 41 is a schematic diagram that illustrates a TCI state indication according to an exemplary embodiment of the present disclosure. Referring to FIG. 41, the first CSI report ID corresponds to the non-SBFD symbols, and the second CSI report ID corresponds to the SBFD symbols.

In one embodiment, the at least one TCI State Indication for PDCCH may be applied if PDCCH for duplex operation (or SBFD) is configured. A CORESET may be activated/configured with a first TCI state.

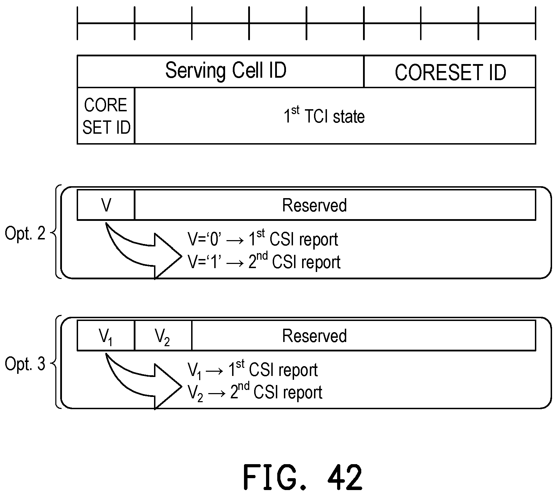

In one embodiment, in option 2, there is a one-bit indication for the at least one TCI State Indication. For example, FIG. 42 is a schematic diagram that illustrates a TCI state indication according to an exemplary embodiment of the present disclosure. Referring to FIG. 42, the field "V" is the one-bit indication. If this field "V" is set to "0", the Rx beam is associated with the first CSI report. If this field "V" is set to "1", the Rx beam is associated with the second CSI report.

In one embodiment, in option 3, there is a bit map for the at least one TCI State Indication. For example, referring to FIG. 42, the field "V₁" may be configured for non-SBFD symbols, and the field "V₂" may be configured for SBFD symbols. If V₁="1", the Rx beam is associated with the first CSI report. If the field V₂="1", the Rx beam is associated with the second CSI report.

In one embodiment, a UE may receive a channel state information (CSI) report configuration, where the CSI report configuration is associated with a downlink (DL) RS and a first resource type. Then, the UE may report a CSI according to the CSI report configuration.

In one embodiment, multiple transmission occasions of the DL RS within the first resource type are used for a derivation of the CSI.

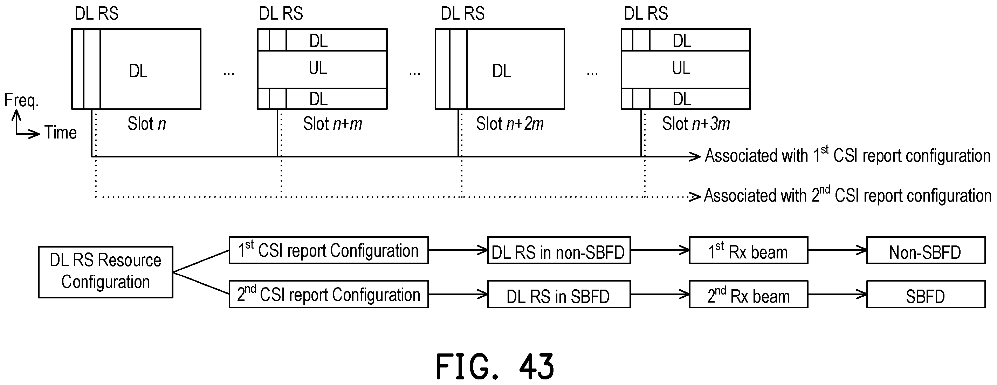

FIG. 43 is a schematic diagram that illustrates an association with two CSI report configurations and two Rx beams for non-SBFD and SBFD symbols according to an exemplary embodiment of the present disclosure. Referring to FIG. 43, according to the capability of UE, the UE may maintain up to two Rx beams for a RS (e.g., CSI-RS) in one or more than one CSI report, where
the first Rx beam may correspond to a DL RS in non-SBFD resource, and/ or the second Rx beam may correspond to the DL RS in SBFD resource.

In one embodiment, the firstRx beam corresponding to a DL RS in a non-SBFD resource (e.g., the first resource type) may be associated with the first CSI report configuration, and the second Rx beam corresponding to the DL RS in an SBFD resource (e.g., the first resource type) may be associated with the second CSI report configuration. However, in some embodiments, UE may not know the relation between CSI report configuration and resource type in this case which means UE may not determine the Rx beam for monitoring the SS set according to the resource type.

In one embodiment, the first CSI report configuration corresponding to the non-SBFD resource is configurated with the first time domain offset, and the second CSI report configuration corresponding to the non-SBFD resource is configurated with the first time domain offset. For example, the first CSI report configuration and the second CSI report configuration correspond to time slots *n, n+m, n+2m,* and *n+3m,* where *n* and *m* are positive integers.

In one embodiment, a frequency resource of the DL RS overlapping with the frequency resource of the DL subbands is punctured. Taking FIG. 43 as an example, at time slot *n+m,* the DL sub-bands allocated for the DL RS are separated by the UL sub-bands.

In one embodiment, a frequency resource of the DL RS is applied within a resource of a DL only. Taking FIG. 43 as an example, at time slot *n,* the frequency resource allocated for the DL RS occupies the usable resource of the DL.

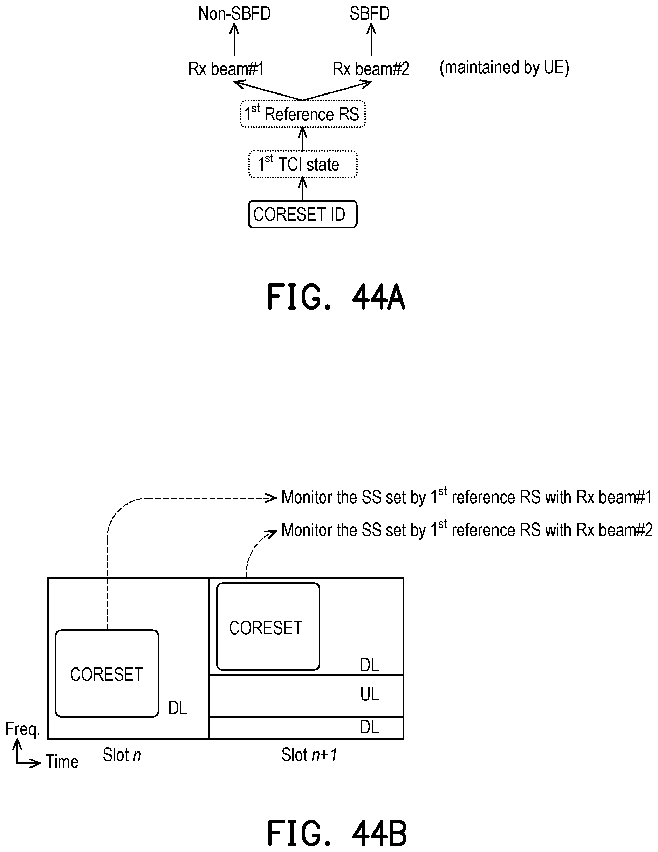

FIG. 44A is a schematic diagram that illustrates an association with one CORESET ID and two Rx beams for non-SBFD and SBFD symbols according to an exemplary embodiment of the present disclosure, and FIG. 44B is a schematic diagram that illustrates a resource allocation for monitoring the SS set according to an exemplary embodiment of the present disclosure. Referring to FIG. 44A and FIG. 44B, when (or in the case that) monitoring a first search space occurs in both SBFD and non-SBFD symbols,
UE may monitor the first search space in non-SBFD symbols by the first reference RS with Rx beam #1, and/ or
UE may monitor the first search space in SBFD symbols by the first reference RS with Rx beam #2.

In one embodiment, UE may report at least one capability, wherein at least one capability may comprise at least one of the following.

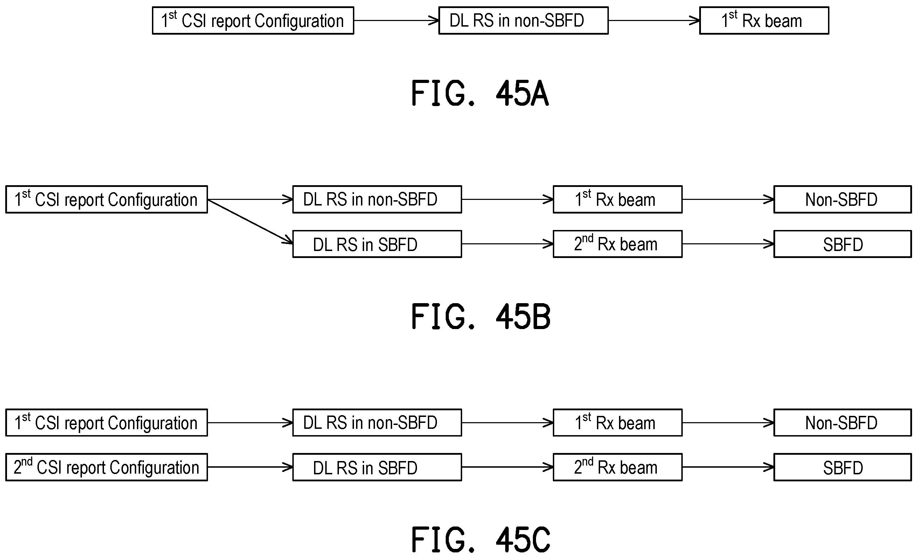

FIG. 45A is a schematic diagram that illustrates UE capability 0 according to an exemplary embodiment of the present disclosure. Referring to FIG. 45A, regarding "Capability 0", UE may maintain one Rx beam tracking corresponding to one RS in a CSI report configuration.

FIG. 45B is a schematic diagram that illustrates UE capability A according to an exemplary embodiment of the present disclosure. Referring to FIG. 45B, regarding "Capability A", UE may maintain two Rx beam tracking corresponding to one RS in a CSI report configuration. For example, the first Rx beam and the second Rx beam correspond to the non-SBFD symbols and SBFD symbols, respectively.

FIG. 45C is a schematic diagram that illustrates UE capability B according to an exemplary embodiment of the present disclosure. Referring to FIG. 45C, regarding "Capability B", UE may maintain two Rx beam tracking corresponding to one RS, where each Rx beam tracking is associated with a CSI report configuration. i.e., two CSI report configurations. For example, the first Rx beam corresponding to the non-SBFD symbols and the second Rx beam corresponding to SBFD symbols are associated with the first CSI report configuration and the second CSI report configuration, respectively.

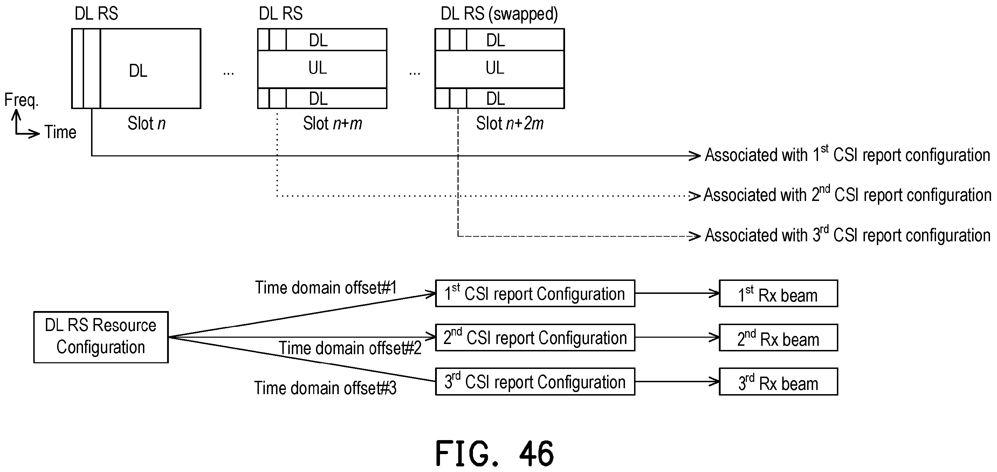

FIG. 46 is a schematic diagram that illustrates a separate CSI report corresponding to a separate Rx beam according to an exemplary embodiment of the present disclosure. Referring to FIG. 46, according to the capability of UE, the UE may maintain up to 3 Rx beams for a RS (e.g., CSI-RS) in one or more than one CSI report, where
the first Rx beam may correspond to a DL RS in non-SBFD resource, and/ or
the second Rx beam may correspond to the DL RS in SBFD resource, and/ or
the third Rx beam may correspond to the DL RS in SBFD resource with panel swapping.

In one embodiment, the first CSI report configuration corresponding to the first Rx beam is configurated with the first time domain offset, e.g., time domain offset #1, the second CSI report configuration corresponding to the second Rx beam is configurated with the second time domain offset, e.g., time domain offset #2, and the third CSI report configuration corresponding to the third Rx beam is configurated with the third time domain offset, e.g., time domain offset #3. For example, the time domain offset #1 corresponds to time slot *n,* where *n* is a positive integer. The time domain offset #2 corresponds to time slot *n+m,* where *m* is a positive integer. The time domain offset #3 corresponds to time slot *n+2m.*

In one embodiment, the at least one TCI State Indication for PDCCH may be applied if PDCCH for duplex operation (or SBFD) is configured. A CORESET may be activated/configured with a first TCI state.

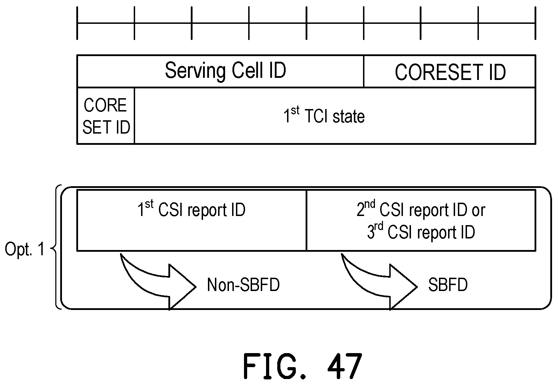

In one embodiment, in option 1, the field "CSI report ID" may indicate the Rx beam associated with a CSI report ID. For example, FIG. 47 is a schematic diagram that illustrates a TCI state indication according to an exemplary embodiment of the present disclosure. Referring to FIG. 47, the first CSI report ID corresponds to the non-SBFD symbols, and the second CSI report ID or the third CSI report ID corresponds to the SBFD symbols.

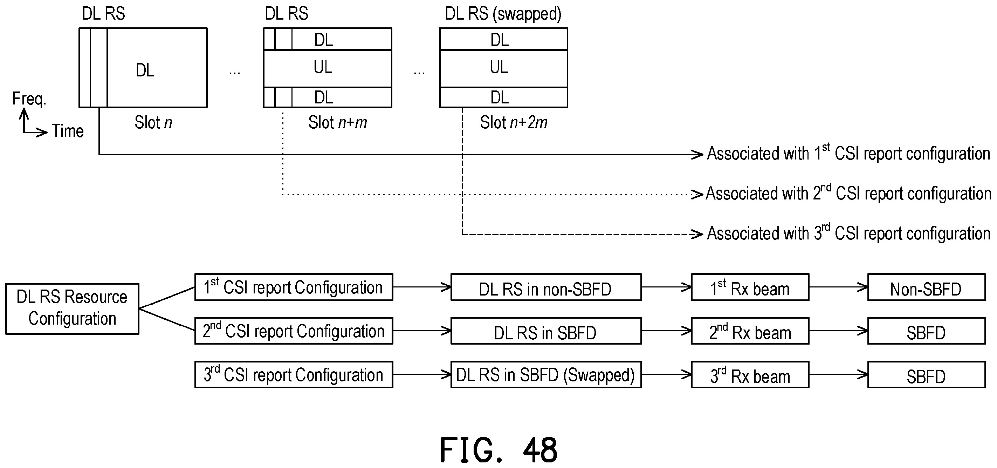

FIG. 48 is a schematic diagram that illustrates a separate CSI report corresponding to separate Rx beam according to an exemplary embodiment of the present disclosure. Referring to FIG. 48, according to the capability of UE, the UE may maintain up to 3 Rx beams for a RS (e.g., CSI-RS) in one or more than one CSI report, where
the first Rx beam may correspond to a DL RS in non-SBFD resource, and/ or
the Rx beam may correspond to the DL RS in SBFD resource, and/ or
the third Rx beam may correspond to the DL RS in SBFD resource with panel swapping.

In one embodiment, the firstRx beam corresponding to a DL RS in a non-SBFD resource may be associated with the first CSI report configuration, the second Rx beam corresponding to the DL RS in an SBFD resource may be associated with the second CSI report configuration, and the third Rx beam corresponding to the DL RS in the SBFD resource (swapped) may be associated with the third CSI report configuration.

In one embodiment, the first CSI report configuration corresponding to the first Rx beam associated with DL RS in a non-SBFD resource is configurated with the first time domain offset, e.g., time domain offset #1, the second CSI report configuration corresponding to the second Rx beam associated with DL RS in an SBFD resource is configurated with the second time domain offset, e.g., time domain offset #2, and the third CSI report configuration corresponding to the third Rx beam associated with DL RS in the SBFD resource (swapped) is configurated with the third time domain offset, e.g., time domain offset #3. For example, the time domain offset #1 corresponds to time slot *n,* where *n* is a positive integer. The time domain offset #2 corresponds to time slot *n+m,* where *m* is a positive integer. The time domain offset #3 corresponds to time slot *n+2m.*

In one embodiment, UE may report at least one capability, wherein at least one capability may comprise at least one of the following.
Capability 0: One SS set associated with 2 CORESETs;
Capability 1: One CORESET associated with 2 TCI states;
Capability 2: One TCI state associated with 2 reference RSs; and/or
Capability 3: One reference associated with 2 Rx beams.

In one embodiment, UE may expect the SS set associated with the first CORESET monitored in a first resource type as a default resource type.

In one embodiment, at least one of the following is associated with a resource type:
the first CORESET,
the first TCI state, or
the reference RS. Furthermore, UE may expect the SS set associated with the first CORESET monitored in the resource type.

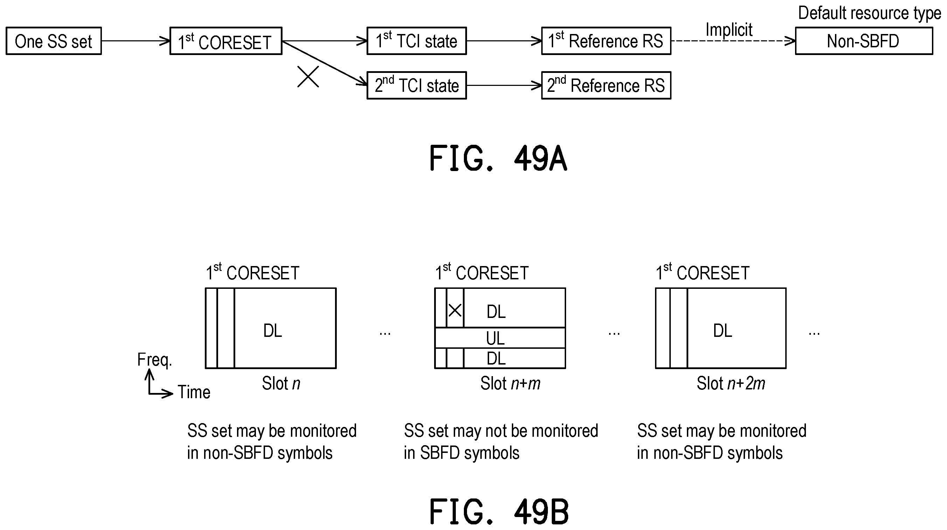

In one embodiment, when (or in the case that) a CORESET is configured/activated with a TCI state, UE may expect the SS set associated with the CORESET monitored in one of resource types. For example, FIG. 49A is a schematic diagram that illustrates an implicit resource type association according to an exemplary embodiment of the present disclosure, and FIG. 49B is a schematic diagram that illustrates a resource allocation for monitoring the SS set according to an exemplary embodiment of the present disclosure. Referring to FIG. 49A, for example, the non-SBFD resource is determined as the default resource type.

FIG. 49B is a schematic diagram that illustrates a resource allocation for monitoring the SS set according to an exemplary embodiment of the present disclosure. Referring to FIG. 49B, when (or in the case that) non-SBFD resource is determined as the default resource type for monitoring the first CORESET, SS set may be monitored in non-SBFD symbols at time slot *n,* where *n* is a positive integer. The SS set may not be monitored in SBFD symbols at time slot *n+m,* where *m* is a positive integer. The SS set may be monitored in non-SBFD symbols at time slot *n+2m.*

In one embodiment, when (in the case that) a CORESET is configured/activated with a TCI state:
If the SS set is a common type, UE may expect the SS set associated with the CORESET monitored in one of the resource types, e.g., non-SBFD symbols as default resource type; and/ or
If the SS set is a UE-specific type, UE may expect the SS set associated with the CORESET monitored in one of the resource types, e.g., SBFD symbols as the default resource type.

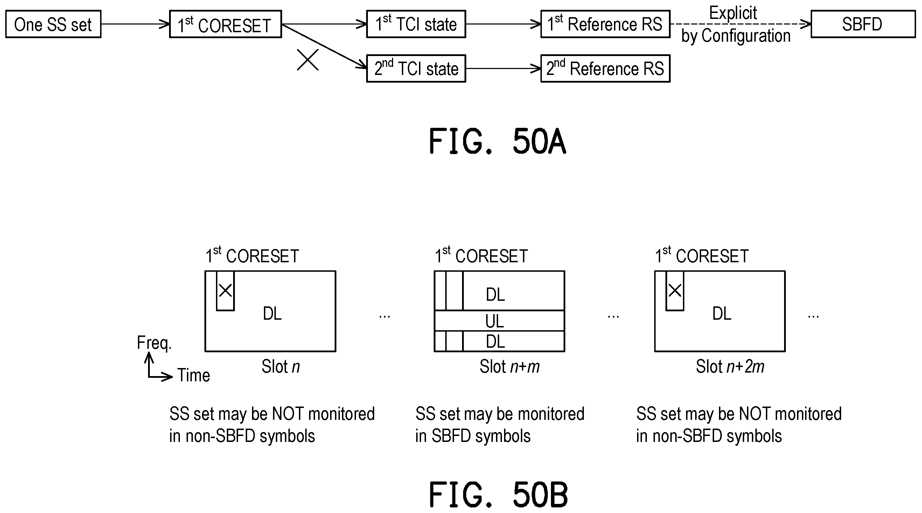

In one embodiment, when (in the case that) a CORESET is configured/activated with a TCI state, where the CORESET and/or the TCI state and/or the reference RS may be associated/configured with a resource type. UE may expect the ss set associated with the CORESET monitored in the resource types. For example, FIG. 50A is a schematic diagram that illustrates an explicit resource type association according to an exemplary embodiment of the present disclosure. Referring to FIG. 50A, the first CORESET, the first TCI state, and the first reference RS are configured with the SBFD resource by a configuration.

FIG. 50B is a schematic diagram that illustrates a resource allocation for monitoring the SS set according to an exemplary embodiment of the present disclosure. Referring to FIG. 50B, when (or in the case that) SBFD resource is configured for monitoring the first CORESET, SS set may be not monitored in non-SBFD symbols at time slot *n,* where *n* is a positive integer. The SS set may be monitored in SBFD symbols at time slot *n+m,* where *m* is a positive integer. The SS set may be not monitored in non-SBFD symbols at time slot *n+2m.*

In one embodiment, when (or in the case that) an SS set monitoring is associated with a reference RS, the SS set may be monitored in the resource type corresponding to the reference RS measured in the CSI report configuration, where the reference RS may be associated with a resource type, e.g., in a CSI report configuration.

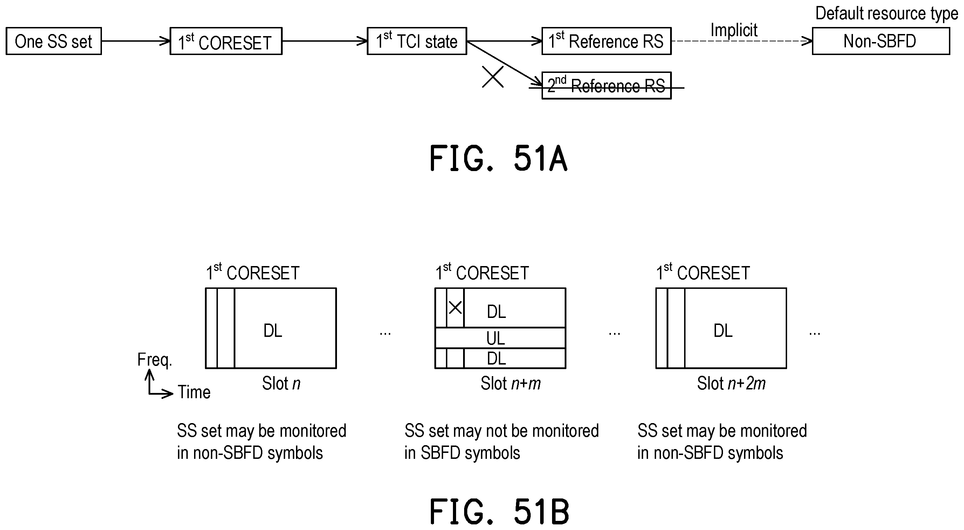

In one embodiment, when (or in the case that) a CORESET is configured/activated with a TCI state and/or a reference RS, UE may expect the ss set associated with the CORESET monitored in one of resource types, e.g., non-SBFD symbols as default resource type. For example, FIG. 51A is a schematic diagram that illustrates an implicit resource type association according to an exemplary embodiment of the present disclosure. Referring to FIG. 51A, non-SBFD resource is determined as the default resource type.

FIG. 51B is a schematic diagram that illustrates a resource allocation for monitoring the SS set according to an exemplary embodiment of the present disclosure. Referring to FIG. 51B, when (or in the case that) non-SBFD resource is determined as the default resource type for monitoring the first CORESET, SS set may be monitored in non-SBFD symbols at time slot *n,* where *n* is a positive integer. The SS set may be not monitored in SBFD symbols at time slot *n+m,* where *m* is a positive integer. The SS set may be monitored in non-SBFD symbols at time slot *n+2m.*

In one embodiment, when (or in the case that) a CORESET is configured/activated with a TCI state and/or a reference RS:
If SS set is a common type, UE may expect the ss set associated with the CORESET monitored in one of resource types, e.g., non-SBFD symbols as default resource type; and/ or
If SS set is UE-specific type, UE may expect the ss set associated with the CORESET monitored in one of resource types, e.g., SBFD symbols as the default resource type.

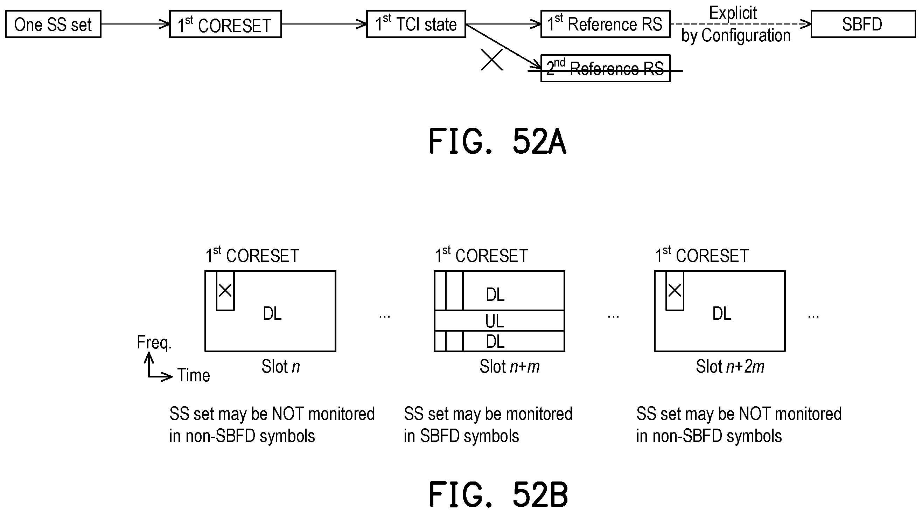

In one embodiment, when (or in the case that) a CORESET is configured/activated with a TCI state and/or a reference RS, UE may expect the SS set associated with the CORESET monitored in the resource types, where the CORESET and/or the TCI state and/or the reference RS may be associated/configured with a resource type. For example, FIG. 52A is a schematic diagram that illustrates an explicit resource type association according to an exemplary embodiment of the present disclosure. Referring to FIG. 52A, the first CORESET, the first TCI state, and the first reference RS are configured with the SBFD resource by a configuration.

FIG. 52B is a schematic diagram that illustrates a resource allocation for monitoring the SS set according to an exemplary embodiment of the present disclosure. Referring to FIG. 52B, when (or in the case that) SBFD resource is configured for monitoring the first CORESET, SS set may be not monitored in non-SBFD symbols at time slot *n,* where *n* is a positive integer. The SS set may be monitored in SBFD symbols at time slot *n+m,* where *m* is a positive integer. The SS set may be not monitored in non-SBFD symbols at time slot *n+2m.*

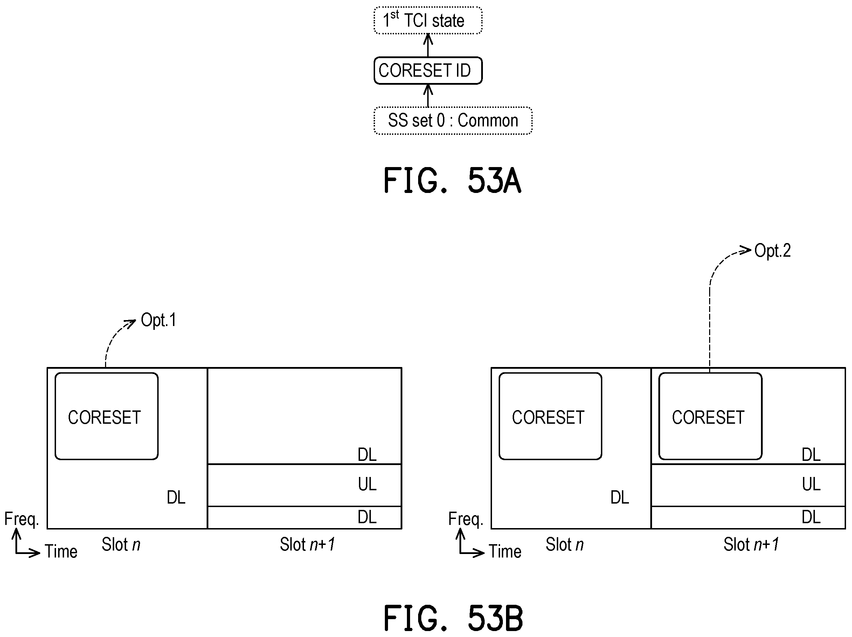

FIG. 53A is a schematic diagram that illustrates an association with an SS set of common type and one TCI state according to an exemplary embodiment of the present disclosure, and FIG. 53B is a schematic diagram that illustrates a resource allocation for monitoring the SS set according to an exemplary embodiment of the present disclosure. Referring to FIG. 53A and FIG. 53B, a CORESET may be activated/configured with a first TCI state and/or a second TCI state. When (or in the case that) the CORESET is a CORESET zero and/or the corresponding SS set is a type of common:
Option 1 as shown on the left side of FIG. 53B: UE may not expect that the search space monitored in SBFD symbols (i.e., implementation by gNB).
Option 2 as shown on the right side of FIG. 53B: UE may monitor the search space by the first TCI state in SBFD symbols, e.g., with a lower coding rate, with a higher aggregation level (AL), or without transmitting DCI in SBFD by gNB, if the search space is monitored in SBFD symbols. Option 3: UE may not monitor the search space, if monitoring a search space may occur in SBFD symbols.

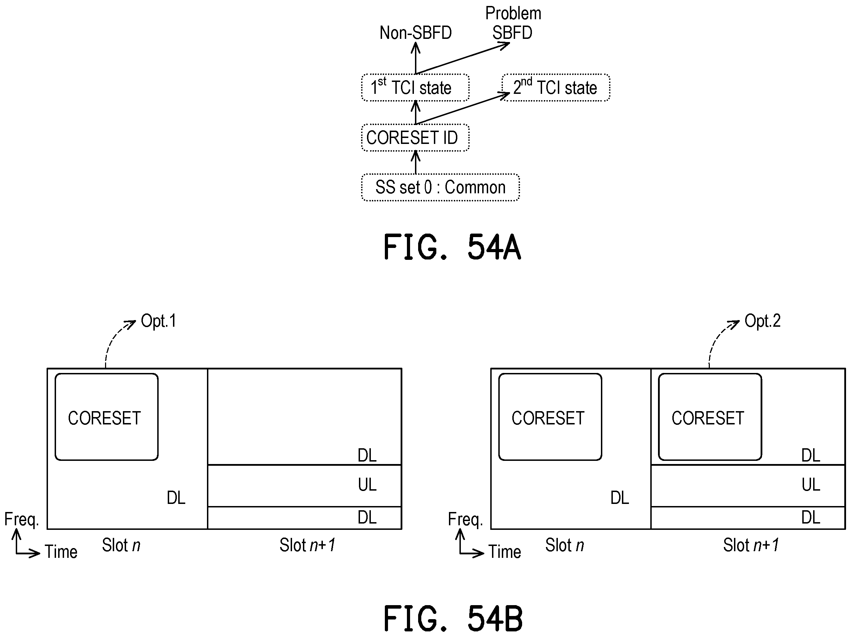

FIG. 54A is a schematic diagram that illustrates an association with an SS set of common type and two TCI states for non-SBFD and SBFD symbols according to an exemplary embodiment of the present disclosure, and FIG. 54B is a schematic diagram that illustrates a resource allocation for monitoring the SS set according to an exemplary embodiment of the present disclosure. Referring to FIG. 54A and FIG. 54B, a CORESET may be activated/configured with a first TCI state and/or a second TCI state. When (or in the case that) the CORESET is a CORESET zero and/or the corresponding SS set is a type of common:
Option 1 as shown on the left side of FIG. 54B: UE may not expect that the search space monitored in SBFD symbols (i.e., implementation by gNB).
Option 2 as shown on the right side of FIG. 54B: UE may monitor the search space by the first TCI state in SBFD symbols, e.g., with a lower coding rate or with a higher aggregation level (AL), if the search space is monitored in SBFD symbols.
Option 3: UE may not monitor the search space, if monitoring a search space may occur in SBFD symbols.

In one embodiment, the first CORESET is configured with a second TCI state, the first TCI state is associated with a first resource type, and the second TCI state is associated with a second resource type. That is one CORESET is configured with two TCI states respectively associated with different resource types. In one embodiment, the SS set is configured with a type of common, UE may receive the DCI according to the SS set configuration in the first resource type and the second resource type by the second TCI state.

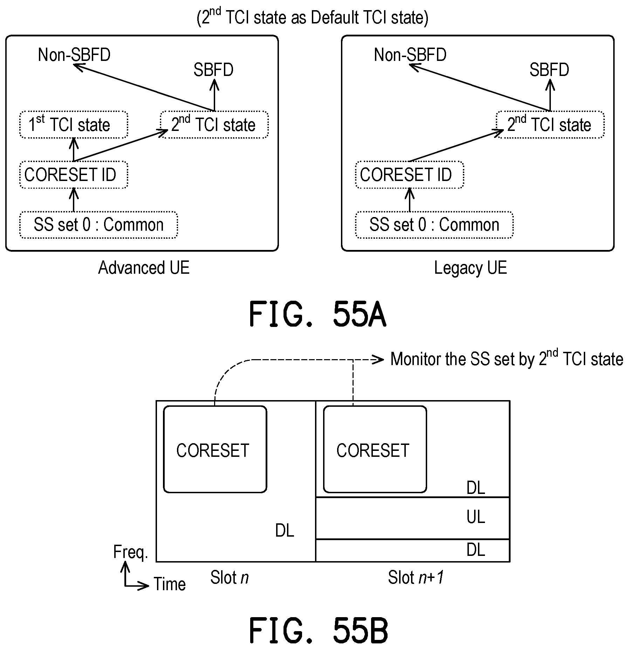

FIG. 55A is a schematic diagram that illustrates an association with an SS set of common type and two TCI states for non-SBFD and SBFD symbols according to an exemplary embodiment of the present disclosure. Referring to FIG. 55A, a CORESET may be activated/configured with a first TCI state and a second TCI state, where
non-SBFD symbols are associated with the first TCI state, and/ or
SBFD symbols are associated with the second TCI state. For example, for advanced UE or legacy UE, UE may monitor the first search space in non-SBFD symbols and SBFD symbols by the second TCI state in which the second TCI state is the default TCI state.

FIG. 55B is a schematic diagram that illustrates a resource allocation for monitoring the SS set according to an exemplary embodiment of the present disclosure. Referring to FIG. 55B, when (in the case that) monitoring a first search space occurs in both SBFD and non-SBFD symbols and/or the first SS is configured with common, UE may monitor the first search space in non-SBFD symbols and SBFD symbols by the first TCI state or the second TCI state (e.g., according to RRC/MAC CE/DCI), where the first TCI state or the second TCI state may be the lowest ID (or highest ID) among the activated TCI state. For example, UE monitors the SS set by the second TCI state in non-SBFD symbols and SBFD symbols. Then, UE may receive the DCI by the CORESET with the second TCI state in non-SBFD symbols and SBFD symbols.

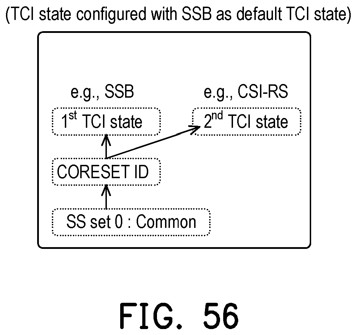

FIG. 56 is a schematic diagram that illustrates an association with an SS set of common type and two TCI states for non-SBFD and SBFD symbols according to an exemplary embodiment of the present disclosure. Referring to FIG. 56, a CORESET may be activated/configured with a first TCI state and a second TCI state, where
non-SBFD symbols are associated with the first TCI state, and/ or
SBFD symbols are associated with the second TCI state. For example, UE may monitor the first search space in non-SBFD symbols and SBFD symbols by the first TCI state, e.g., SSB, and the second TCI state, e.g., CSI-RS, in which the TCI state is configured with SSB as the default TCI state.

In one embodiment, the first TCI state is configured with a second reference RS, the first reference RS is associated with a first resource type, and the second reference RS is associated with a second resource type. That is one TCI state is configured with two different reference RSs respectively associated with different resource types. In one embodiment, the SS set is configured with a type of common, and UE may receive the DCI according to the SS set configuration in the first resource type and the second resource type by the second reference RS.

In one embodiment, when (in the case that) monitoring a first search space occurs in both SBFD and non-SBFD symbols and/or the first SS is configured with a common type, UE may monitor the first search space in non-SBFD symbols and SBFD symbols associated with the TCI state configured with SSB.

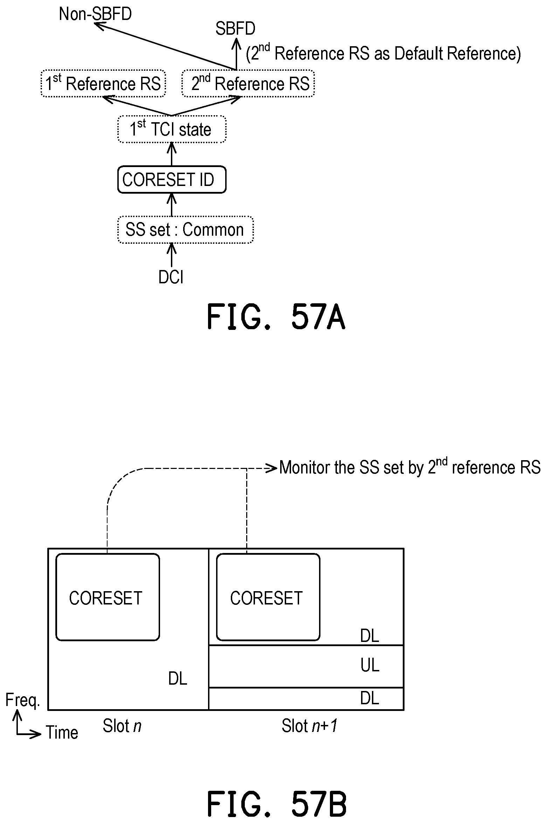

FIG. 57A is a schematic diagram that illustrates an association with an SS set of common type and two reference RSs for non-SBFD and SBFD symbols according to an exemplary embodiment of the present disclosure. Referring to FIG. 57A, a TCI state may be activated/configured with a first reference RS and a second reference RS, where
non-SBFD symbols associated with the first reference RS, and/ or
SBFD symbols associated with the second reference RS.

FIG. 57B is a schematic diagram that illustrates a resource allocation for monitoring the SS set according to an exemplary embodiment of the present disclosure. Referring to FIG. 57B, when (in the case that) monitoring a first search space occurs in both SBFD and non-SBFD symbols and/or the first SS is configured with the common type, UE may monitor the first search space in non-SBFD symbols and SBFD symbols by the TCI state associated with the first reference RS or the second reference RS (e.g., according to RRC/MAC CE/DCI), where the first reference RS or the second reference RS may be the lowest ID (or highest ID) among the reference RSs. For example, UE monitors the SS set by the second reference RS in non-SBFD symbols and SBFD symbols. Then, UE may receive the DCI in non-SBFD symbols and SBFD symbols by the second reference RS.

In one embodiment, the first reference RS is associated with a second spatial Rx parameter, the first spatial Rx parameter is associated with a first resource type, and the second spatial Rx parameter is associated with a second resource type. That is one reference RS is associated with two different spatial Rx parameters respectively associated with different resource types. Each spatial Rx parameter is associated with a specific Rx beam. In one embodiment, UE may not expect to monitor the SS set with different Rx beams in the case that a corresponding TCI state is configured with a synchronization signal block (SSB) as a reference RS.

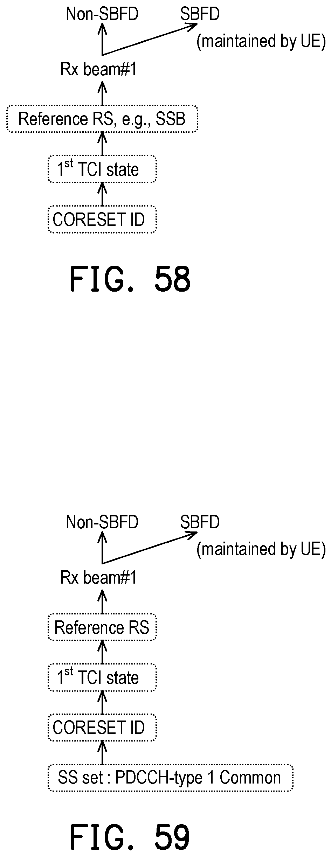

FIG. 58 is a schematic diagram that illustrates an association with one CORESET ID and one Rx beam for non-SBFD and SBFD symbols according to an exemplary embodiment of the present disclosure. Referring to FIG. 58, when (in the case that) UE reports a capability of more than one Rx beam tracking to a reference RS, UE may not expect SS set monitoring with a different Rx beam if the corresponding TCI state is configured with SSB as a reference RS.

FIG. 59 is a schematic diagram that illustrates an association with an SS set with common type and one Rx beam for non-SBFD and SBFD symbols according to an exemplary embodiment of the present disclosure. Referring to FIG. 59, when (in the case that) UE reports a capability of more than one Rx beam tracking to a reference RS, UE may not expect PDCCH type1 Common SS set monitoring with different Rx beams in non-SBFD and SBFD symbols.

In one embodiment, in the case that more than one SS set in the first CORESET is monitored in the same resource type with different TCI states or different reference RSs, UE may monitor the SS set configured with a common type.

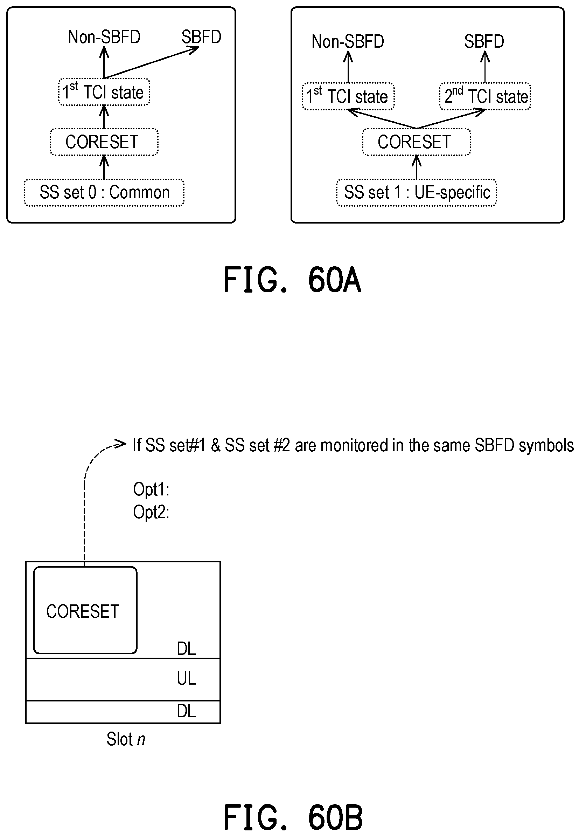

FIG. 60A is a schematic diagram that illustrates associations with SS sets and one or two TCI states for non-SBFD and SBFD symbols according to an exemplary embodiment of the present disclosure. Referring to FIG. 60A, there may be more than one SS set in a CORESET monitored in the same resource type with different TCI states. For example, the common SS set in a CORESET is monitored in the non-SBFD and SBFD symbols with the first TCI state. However, the UE-specific SS set in a CORESET may be monitored in the SBFD symbols with the second TCI state.

FIG. 60B is a schematic diagram that illustrates a resource allocation for monitoring the SS set according to an exemplary embodiment of the present disclosure. Referring to FIG. 60B, when (in the case that) more than one SS set in a CORESET monitored in the same resource type with different TCI states:
Option 1:
   Step 1: UE may monitor the SS set configured with a common type.
   Step 2: If more than one SS sets are configured with a common type with the same TCI state, UE may monitor more than one SS set is configured with the common type.
   Step 3: If more than one SS sets are configured with a common type with different TCI states, UE may monitor the lowest SS set ID.
Option 2:
   UE may monitor the lowest SS set ID. gNB may configure the lowest SS set ID with a common type.

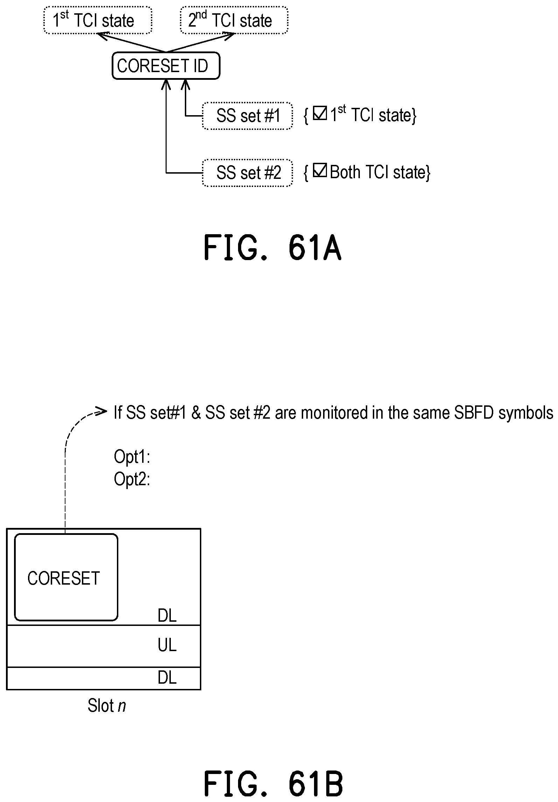

FIG. 61A is a schematic diagram that illustrates an association with two SS sets and two TCI states according to an exemplary embodiment of the present disclosure. Referring to FIG. 61A, there may be more than one SS set in a CORESET monitored in the same resource type with different TCI states. For example, the SS set #1 in a CORESET is monitored by the first TCI state in the SBFD symbols. However, the SS set #2 in a CORESET is also monitored by the second TCI state in the SBFD symbols.

FIG. 61B is a schematic diagram that illustrates a resource allocation for monitoring the SS set according to an exemplary embodiment of the present disclosure. Referring to FIG. 61B, when (in the case that) more than one SS set in a CORESET monitored in the same resource type with different TCI states:
Option 1:
   Step 1: UE may monitor the SS set configured with a common type.
   Step 2: If more than one SS sets are configured with a common type with the same TCI state, UE may monitor more than one SS set is configured with the common type.
   Step 3: If more than one SS set is configured with a common type with different TCI states, UE may monitor the lowest SS set ID.
Option 2:
   UE may monitor the lowest SS set ID. gNB may configure the lowest SS set ID with a common type.

Referring to FIG. 61B, when (in the case that) more than one SS set in a CORESET monitored in the same resource type with different TCI states:
Option 1:
   Step 1: UE may monitor the more than one SS set by the TCI state associated with the SS set configured with a common type.
Option 2:
   UE may monitor the more than one SS set in the CORESET by the TCI state associated with the lowest SS set ID. gNB may configure the lowest SS set ID with a common type.

In one embodiment, in a case that more than one SS set in the first CORESET is monitored in the same resource type with different TCI states or different reference RSs, UE may monitor the more than one SS set by a TCI state associated with the SS set configuration with the common type or a reference RS associated with the SS set configuration with the common type.

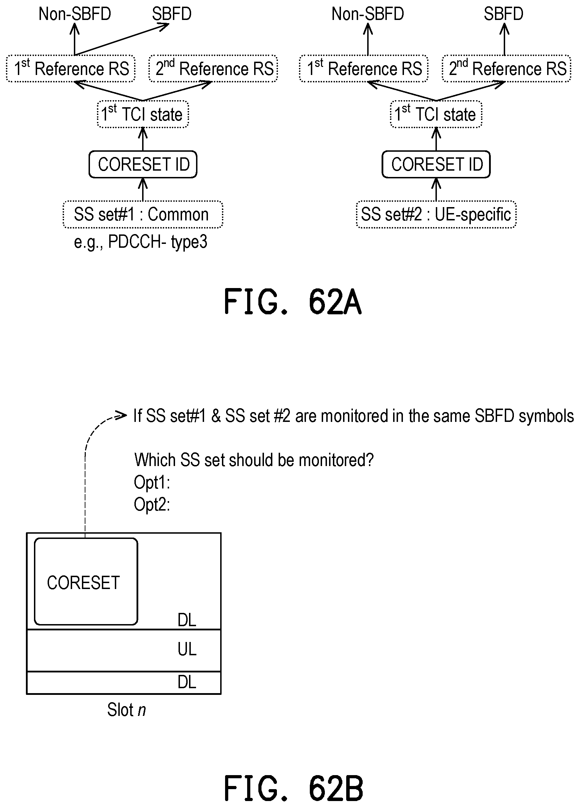

FIG. 62A is a schematic diagram that illustrates associations with SS sets and one or two reference RSs for non-SBFD and SBFD symbols according to an exemplary embodiment of the present disclosure. Referring to FIG. 62A, there may be more than one SS set in a CORESET monitored in the same resource type with the same TCI state but with different reference RSs. For example, the PDCCH type 3 common SS set in a CORESET may be monitored in the SBFD symbols with the first TCI state with the first reference RSs. The UE-specific SS set in a CORESET may be monitored in the SBFD symbols with the first TCI state with the second reference RSs.

FIG. 62B is a schematic diagram that illustrates a resource allocation for monitoring the SS set according to an exemplary embodiment of the present disclosure. Referring to FIG. 62B, when (in the case that) more than one SS set in a CORESET monitored in the same resource type with the same TCI state but with different reference RSs:
Option 1:
   Step 1: UE may monitor the SS set configured with a common type.
   Step 2: If more than one SS sets are configured with a common type with the same reference RS, UE may monitor more than one SS set configured with the common type.
   Step 3: If more than one SS sets are configured with a common type with different reference RSs, UE may monitor the lowest SS set ID.
Option 2:
   UE may monitor the lowest SS set ID. gNB may configure the lowest SS set ID with a common type.

Referring to FIG. 62B, when (in the case that) more than one SS set in a CORESET monitored in the same resource type with the same TCI state but with different reference RSs:
Option 1:
   Step 1: UE may monitor the more than one SS set by the reference RS associated with the SS set configured with a common type.
Option 2:
   UE may monitor the more than one SS set in the CORESET by the reference RS associated with the lowest SS set ID. gNB may configure the lowest SS set ID with a common type.

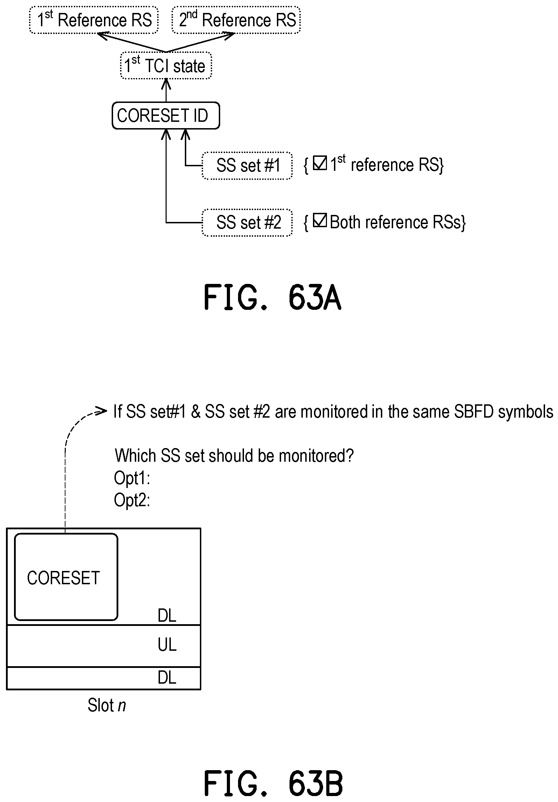

FIG. 63A is a schematic diagram that illustrates associations with two SS sets and two reference RSs according to an exemplary embodiment of the present disclosure. Referring to FIG. 63A, there may be more than one SS set in a CORESET monitored in the same resource type with the same TCI state but with different reference RSs. For example, the SS set #1 in a CORESET is monitored by the first reference RS in the SBFD symbols. However, the SS set #2 in a CORESET is monitored by the second reference RS in the SBFD symbols.

FIG. 63B is a schematic diagram that illustrates a resource allocation for monitoring the SS set according to an exemplary embodiment of the present disclosure. Referring to FIG. 63B, when (in the case that) more than one SS set in a CORESET monitored in the same resource type with the same TCI state but with different reference RSs:
Option 1:
   Step 1: UE may monitor the SS set configured with a common type.
   Step 2: If more than one SS sets are configured with a common type with the same reference RS, UE may monitor more than one SS set is configured with the common type.
   Step 3: If more than one SS sets are configured with a common type with different reference RSs, UE may monitor the lowest SS set ID.
Option 2:
   UE may monitor the lowest SS set ID. gNB may configure the lowest SS set ID with a common type.

Referring to FIG. 63B, when (in the case that) more than one SS set in a CORESET monitored in the same resource type with the same TCI state but with different reference RSs:
Option 1:
   Step 1: UE may monitor the more than one SS set by the reference RS associated with the SS set configured with a common type.
Option 2:
   UE may monitor the lowest SS set ID. gNB may configure the lowest SS set ID with a common type.

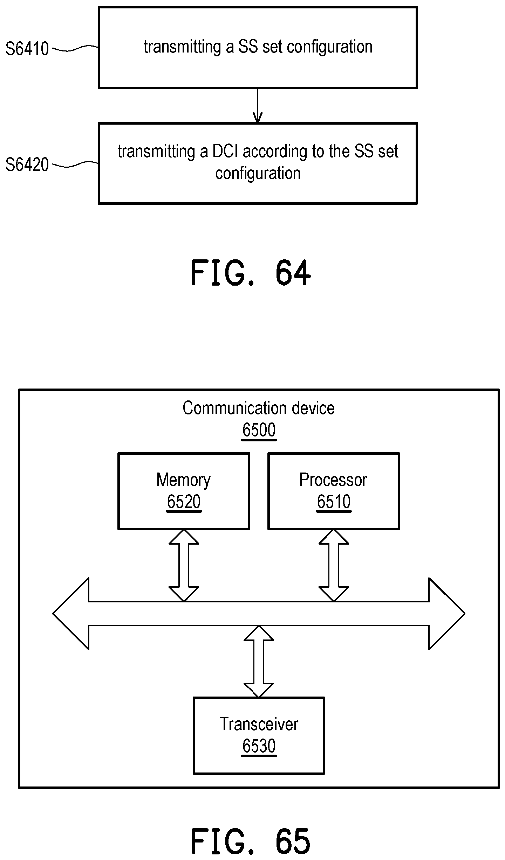

FIG. 64 is a flow chart that illustrates a method according to an exemplary embodiment of the present disclosure. Referring to FIG. 64, the method may be implemented by a base station NW. The base station NW transmits a search space (SS) set configuration (step S6410). Specifically, an SS set corresponding to the SS set configuration is configured with a first control resource set (CORESET). The first CORESET is configurated with a first transmission configuration indication (TCI) state. The first TCI state is configured with one reference reference signal (RS). Furthermore, the reference RS is associated with a spatial receiver (Rx) parameter. In one embodiment, the first CORESET is further associated with a serving cell identity (ID). For example, the serving cell ID of the base station NW, TRP#1, or TRP#2. The base station NW transmits a downlink control information (DCI) according to the SS set configuration (step S6420).

In one embodiment, a base station NW may transmit a configuration to receive, by a UE, the DCI or the SS set associated with at least one of: a first resource type or a second resource type. In one embodiment, the received DCI or SS set is associated with the first resource type and the second resource type. The first resource type may be, for example, SBFD. The second resource type may be, for example, non-SBFD such as TDD.

In one embodiment, a base station NW may transmit a channel state information (CSI) report configuration, where the CSI report configuration is associated with a downlink (DL) RS and a first resource type. Then, the UE may report a CSI according to the CSI report configuration.

In one embodiment, multiple transmission occasions of the DL RS within the first resource type are used for a derivation of the CSI by an UE.

In one embodiment, the first resource type is associated with a sub-band full duplex or a DL. The first resource type may be, for example, SBFD associated with a sub-band full duplex. However, the first resource type may be, for example, non-SBFD such as TDD with a DL. The second resource type may be, for example, SBFD associated with a sub-band full duplex. However, the second resource type may be, for example, non-SBFD such as TDD with a DL.

In one embodiment, a frequency resource of the DL RS overlapping with frequency resource of DL subbands is punctured.

In one embodiment, a frequency resource of the DL RS is applied within a resource of a DL only.

In one embodiment, the SS set is configured with a second CORESET, the second CORESET is configured with a second TCI state, the first CORESET is associated with a first resource type, and the second CORESET is associated with a second resource type.

In one embodiment, in the case of the SS set monitored in the first resource type, a base station NW may transmit the DCI by the first CORESET with the first TCI state. In the case of the SS set monitored in the second resource type, a base station NW may transmit the DCI by the second CORESET with the second TCI state.

In one embodiment, the first CORESET is configured with a second TCI state, the first TCI state is associated with a first resource type, and the second TCI state is associated with a second resource type.

In one embodiment, the SS set is configured with a type of user equipment (UE) specific, a base station NW may transmit the DCI by the first CORESET with the first TCI state in the case of the SS set monitored in the first resource type, and the base station NW may transmit the DCI by the first CORESET with the second TCI state in the case of the SS set monitored in the second resource type.

In one embodiment, the SS set is configured with a type of common, and a base station NW may transmit the DCI according to the SS set configuration in the first resource type and the second resource type by the first TCI state.

In one embodiment, the SS set is configured with a type of common, and a base station NW may transmit the DCI according to the SS set configuration in the first resource type and the second resource type by the second TCI state.

In one embodiment, the first CORESET is configured with a second TCI state, and a base station NW may transmit a new field configuration for a determination of TCI state association.

In one embodiment, the SS set is configured with a type of user equipment (UE) specific, a base station NW may transmit the DCI by the first CORESET with the first TCI state in the case of the SS set monitored in the first resource type, and the base station NW may transmit the DCI by the first CORESET with the second TCI state in the case of the SS set monitored in the second resource type.

In one embodiment, the SS set is configured with a type of common, and a base station NW may transmit the DCI according to the SS set configuration in the first resource type and the second resource type by the first TCI state.

In one embodiment, the SS set is configured with a type of common, and a base station NW may transmit the DCI according to the SS set configuration in the first resource type and the second resource type by the second TCI state.

In one embodiment, the first CORESET is configured with a second TCI state, and a base station NW may transmit a new field configuration for a determination of TCI state association.

In one embodiment, in the case that the SS set is configured to select both the first TCI state and the second TCI state according to the new field configuration, a base station NW may transmit the DCI by the first TCI state in a first resource type and transmit the DCI by the second TCI state in a second resource type.

In one embodiment, in the case that the SS set is configured to select either the first TCI state or the second TCI state according to the new field configuration, a base station NW may transmit the DCI in the first resource type and the second resource type by either the first TCI state or the second TCI state, respectively.

In one embodiment, in the case that the SS set is configured to select either the first TCI state or the second TCI state according to the new field configuration, a base station NW may transmit the DCI by the first TCI state in the first resource type by the first TCI state or in the second resource type by the second TCI state, respectively, or the base station NW may not transmit the DCI in the second resource type or the first resource type, respectively.

In one embodiment, the SS set is associated with the first CORESET monitored in a first resource type as a default resource type.

In one embodiment, at least one of the following is associated with a resource type: the first CORESET, the first TCI state, or the reference RS. The SS set is associated with the first CORESET monitored in the resource type.

In one embodiment, in the case that more than one SS set in the first CORESET is monitored in the same resource type with different TCI states or different reference RSs, a base station NW may transmit the SS set configured with a common type.

In one embodiment, in the case that more than one SS set in the first CORESET monitored in the same resource type with different TCI states or different reference RSs, a base station NW may transmit more than one SS set by a TCI state associated with the SS set configuration with the common type or a reference RS associated with the SS set configuration with the common type.

In one embodiment, the first TCI state is configured with a second reference RS, the first reference RS is associated with a first resource type, and the second reference RS is associated with a second resource type.

In one embodiment, the SS set is configured with a type of UE-specific, a base station NW may transmit the DCI by the first TCI state with the first reference RS in the case of the SS set monitored in the first resource type, and the base station NW may transmit the DCI by the first TCI state with the second reference RS in the case of the SS set monitored in the second resource type.

In one embodiment, the SS set is configured with a type of common, and a base station NW may transmit the DCI according to the SS set configuration in the first resource type and the second resource type by the first reference RS.

In one embodiment, the SS set is configured with a type of common, and a base station NW may transmit the DCI according to the SS set configuration in the first resource type and the second resource type by the second reference RS.

In one embodiment, the first TCI state is configured with a second reference RS, and a base station NW may transmit a new field configuration for a determination of TCI state association.

In one embodiment, in the case that the SS set is configured to select both the first reference RS and the second reference RS according to the new field configuration, a base station NW may transmit the DCI by the first reference RS in a first resource type and transmit the DCI by the second reference RS in a second resource type.

In one embodiment, in the case that the SS set is configured to select either the first reference RS or the second reference RS according to the new field configuration, a base station NW may transmit the DCI in the first resource type and the second resource type by either the first TCI state or the second TCI state, respectively.

In one embodiment, in a case that the SS set is configured to select either the first reference RS or the second reference RS according to the new field configuration, a base station NW may transmit the DCI in the first resource type by the first TCI state or in the second resource type by the second TCI state, respectively, and/ or the base station NW may not transmit the DCI in the second resource type or in the first resource type, respectively.

In one embodiment, the first reference RS is associated with a second spatial Rx parameter, the first spatial Rx parameter is associated with a first resource type, and the second spatial Rx parameter is associated with a second resource type.

In one embodiment, the SS set is configured with a type of UE-specific, a base station NW may transmit the DCI by the first TCI state with the first spatial Rx parameter in the case of the SS set monitored in the first resource type, and the base station NW may transmit the DCI by the first TCI state with the second spatial Rx parameter in the case of the SS set monitored in the second resource type.

In one embodiment, the SS set is configured with a type of common, and a base station NW may transmit the DCI according to the SS set configuration in the first resource type and the second resource type.

In one embodiment, a base station NW may not transmit the SS set with different Rx beams in the case that a corresponding TCI state is configured with synchronization signal block (SSB) as a reference RS.

In one embodiment, the first reference RS is associated with a second spatial Rx parameter, the first spatial Rx parameter is associated with a first CSI report configuration, and the second spatial Rx parameter is associated with a second CSI report configuration.

In one embodiment, the first CORESET is configured with the first CSI report configuration or the second CSI report configuration, and a base station NW may transmit the DCI according to the SS set configuration in the first resource type or the second resource type, respectively.

FIG. 65 is a block diagram that illustrates a communication device according to an exemplary embodiment of the present disclosure. Referring to FIG. 65, the communication device 6500 may be a UE or a network device. The communication device 6500 may include, but is not limited thereto a processor 6510. The processor 6510 (e.g., having processing circuitry) may include an intelligent hardware device, e.g., a Central Processing Unit (CPU), a microcontroller, an ASIC, etc. The processor 6510 can call and run a computer program from memory to implement the method in the embodiment of the disclosure.

Since the program code stored in the communication device 6500 adopts all the technical solutions of all the foregoing embodiments when being executed by the processor 6510, it at least has all the advantageous effects brought by all the technical solutions of all the foregoing embodiments, and no further description is incorporated herein.

Optionally, as shown in FIG. 65, the communication device 6500 may further include a memory 6520. The memory 6520 may include computer-storage media in the form of volatile and/or non-volatile memory. The memory 6520 may be removable, non-removable, or a combination thereof. Exemplary memory includes solid-state memory, hard drives, optical-disc drives, etc. The processor 6510 may call and run a computer program from the memory 6520 to implement the method in the embodiment of the disclosure.

The memory 6520 may be a separate device independent of the processor 6510, or may be integrated in the processor 6510.

Optionally, as shown in FIG. 65, the communication device 6500 may further include a transceiver 6530, and the processor 6510 may control the transceiver 6530 to communicate with other devices. The transceiver 6530 having a transmitter (e.g., transmitting/transmission circuitry) and a receiver (e.g., receiving/reception circuitry) may be configured to transmit and/or receive time and/or frequency resource partitioning information. In some implementations, the transceiver 6530 may be configured to transmit in different types of subframes and slots including, but not limited to, usable, non-usable and flexibly usable subframes and slot formats. The transceiver 6530 may be configured to receive data and control channels.

Specifically, the transceiver 6530 may send information or data to other devices, or receive information or data sent by other devices.

Specifically, the transceiver 6530 may include a transmitter and a receiver. The transceiver 6530 may further include an antenna, and the number of antennas may be one or more.

Optionally, the communication device 6500 may specifically be a network device in an embodiment of the disclosure, and the communication device 6500 may implement the corresponding process implemented by the network device in various methods of the embodiment of the disclosure. For the conciseness, related descriptions are omitted.

Optionally, the communication device 6500 may specifically be a mobile terminal, a terminal device, or a UE in an embodiment of the disclosure, and the communication device 6500 may implement the corresponding process implemented by the mobile terminal, the terminal device, or the UE in various methods in the embodiment of the disclosure. For conciseness, a related description is omitted.

## Claims

1. A method, adapted for a user equipment, named UE, (UE) in a wireless communication system, comprising:
receiving a search space, named SS, set configuration, wherein
a SS set is configured with a first control resource set, named CORESET,
the first CORESET is configurated with a first transmission configuration indication, named TCI, state,
the first CORESET is associated with a serving cell identity, named ID,
the first TCI state is configured with one reference reference signal, named RS, and
the reference RS is associated with a spatial receiver, named Rx, parameter; and receiving a downlink control information, named DCI, according to the SS set configuration.

2. The method according to claim 1, further comprising:
receiving a configuration to receive the DCI or the SS set associated with at least one of:
a first resource type or
a second resource type.

3. The method according to claim 2, wherein
a received DCI or SS set is associated with the first resource type and the second resource type.

4. The method according to any one of claims 1-3, further comprising:
receiving a channel state information, named CSI, report configuration, wherein the CSI report configuration is associated with a downlink, named DL, RS and a first resource type; and
reporting a CSI according to the CSI report configuration.

5. The method according to any one of claims 1-4, further comprising:
a plurality of transmission occasions of the DL RS within the first resource type are used for a derivation of the CSI.

6. The method according to claim 4, wherein
the first resource type is associated with a sub-band full duplex or a DL.

7. The method according to claim 4, wherein
a frequency resource of the DL RS overlapping with frequency resource of DL subbands is punctured; or
a frequency resource of the DL RS is applied within a resource of a DL only.

8. The method according to any one of claims 1-7, wherein
the first TCI state is configured with a second reference RS,
the first reference RS is associated with a first resource type, and
the second reference RS is associated with a second resource type.

9. The method according to claim 8, wherein
the SS set is configured with a type of UE-specific, and receiving the DCI according to the SS set configuration comprises:
in a case of the SS set monitored in the first resource type, receiving the DCI by the first TCI state with the first reference RS; and
in a case of the SS set monitored in the second resource type, receiving the DCI by the first TCI state with the second reference RS; or
the SS set is configured with a type of common, and receiving the DCI according to the SS set configuration comprises:
receiving the DCI according to the SS set configuration in the first resource type and the second resource type by the first reference RS; or
the SS set is configured with a type of common, and receiving the DCI according to the SS set configuration comprises:
receiving the DCI according to the SS set configuration in the first resource type and the second resource type by the second reference RS.

10. The method according to claim 1, wherein receiving the DCI according to the SS set configuration comprises:
the first TCI state is configured with a second reference RS, and the method further comprises:
receiving a new field configuration for a determination of TCI state association.

11. The method according to claim 10, wherein receiving the DCI according to the SS set configuration comprises:
in a case that the SS set is configured to select both the first reference RS and the second reference RS according to the new field configuration,
receiving the DCI by the first reference RS in a first resource type; and
receiving the DCI by the second reference RS in a second resource type; or
in a case that the SS set is configured to select either the first reference RS or the second reference RS according to the new field configuration,
receiving the DCI in the first resource type and the second resource type by either the first TCI state or the second TCI state, respectively; or
in a case that the SS set is configured to select either the first reference RS or the second reference RS according to the new field configuration,
receiving the DCI in the first resource type by the first TCI state or in the second resource type by the second TCI state, respectively; or
not expecting to receiving the DCI in the second resource type or in the first resource type, respectively.

12. The method according to any one of claims 1-11, wherein
the first reference RS is associated with a second spatial Rx parameter,
the first spatial Rx parameter is associated with a first resource type, and
the second spatial Rx parameter is associated with a second resource type.

13. The method according to claim 12, wherein
the SS set is configured with a type of UE-specific, and receiving the DCI according to the SS set configuration comprises:
in a case of the SS set monitored in the first resource type, receiving the DCI by the first TCI state with the first spatial Rx parameter; and
in a case of the SS set monitored in the second resource type, receiving the DCI by the first TCI state with the second spatial Rx parameter; or
the SS set is configured with a type of common, and receiving the DCI according to the SS set configuration comprises:
receiving the DCI according to the SS set configuration in the first resource type and the second resource type; or
not expecting to monitor the SS set with different Rx beams in a case that a corresponding TCI state is configured with synchronization signal block, named SSB, as a reference RS.

14. The method according to any one of claims 1-13, wherein
the first reference RS is associated with a second spatial Rx parameter,
the first spatial Rx parameter is associated with a first CSI report configuration, and
the second spatial Rx parameter is associated with a second CSI report configuration,
the first CORESET is configured with the first CSI report configuration or the second CSI report configuration, and receiving the DCI according to the SS set configuration comprises:
receiving the DCI according to the SS set configuration in the first resource type or the second resource type, respectively.

15. A user equipment, named UE, (UE), comprising:
a transceiver (6530), configured to transmit or receive wireless signals;
a memory (6520), configured to store a program code; and
a processor (6510), coupled to the transceiver (6530) and the memory (6520), configured to execute the program code to perform:
receiving, through the transceiver (6530), a search space, named SS, set configuration, wherein
a SS set is configured with a first control resource set, named CORESET,
the first CORESET is configurated with a first transmission configuration indication, named TCI, state,
the first CORESET is associated with a serving cell identity, named ID,
the first TCI state is configured with one reference reference signal, named RS, and
the reference RS is associated with a spatial receiver, named Rx, parameter; and
receiving, through the transceiver (6530), a downlink control information, named DCI, according to the SS set configuration.

16. A method, adapted for a network device (NW) in a wireless communication system, comprising:
transmitting a search space, named SS, set configuration, wherein
a SS set is configured with a first control resource set, named CORESET,
the first CORESET is configurated with a first transmission configuration indication, named TCI, state,
the first CORESET is associated with a serving cell identity, named ID,
the first TCI state is configured with one reference reference signal, named RS, and
the reference RS is associated with a spatial receiver, named Rx, parameter; and
transmitting a downlink control information, named DCI, according to the SS set configuration.
